(19) Europäisches Patentamt
European Patent Office
Office européen des brevets

(11) **EP 4 546 886 A1**

(12) **EUROPEAN PATENT APPLICATION**
published in accordance with Art. 153(4) EPC

(43) Date of publication:
30.04.2025 Bulletin 2025/18

(21) Application number: 23846953.0

(22) Date of filing: 25.07.2023

(51) International Patent Classification (IPC):
H04W 52/02 (2009.01)    H04B 7/06 (2006.01)
H04W 72/23 (2023.01)    H04L 5/00 (2006.01)

(52) Cooperative Patent Classification (CPC):
H04B 7/06; H04L 5/00; H04W 52/02; H04W 72/23

(86) International application number:
PCT/KR2023/010726

(87) International publication number:
WO 2024/025294 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.07.2022 KR 20220092753

(71) Applicant: Samsung Electronics Co., Ltd.
Suwon-si, Gyeonggi-do 16677 (KR)

(72) Inventors:
• SHIN, Cheolkyu
Suwon-si, Gyeonggi-do 16677 (KR)
• KIM, Youngbum
Suwon-si, Gyeonggi-do 16677 (KR)
• KIM, Younsun
Suwon-si, Gyeonggi-do 16677 (KR)
• RYU, Hyunsuk
Suwon-si, Gyeonggi-do 16677 (KR)
• PARK, Kyoungmin
Suwon-si, Gyeonggi-do 16677 (KR)

(74) Representative: Nederlandsch Octrooibureau
P.O. Box 29720
2502 LS The Hague (NL)

(54) **METHOD AND DEVICE FOR ENERGY SAVING IN WIRELESS COMMUNICATION SYSTEM**

(57) The present disclosure relates to a 5G or 6G communication system for supporting higher data transmission rates. Specifically, a method performed by a terminal in a wireless communication system comprises the steps of: receiving, from a base station, an RRC message including information indicating the number of ports; receiving, from the base station, a message for deactivating at least one port among ports corresponding in number to the number of ports, wherein the message includes resource allocation information in a frequency domain associated with the at least one port; receiving an CSI-RS from the base station via ports that are among the ports corresponding in number to the number of ports but exclude the at least one antenna port deactivated on the basis of the message; and reporting, to the base station, CSI acquired on the basis of the CSI-RS.

FIG. 14

EP 4 546 886 A1

## Description

[Technical Field]

This disclosure relates to a wireless communication system, and more particularly, to a method and device for energy saving in a wireless communication system.

[Background Art]

5G mobile communication technologies define broad frequency bands such that high transmission rates and new services are possible, and can be implemented not only in "Sub 6 GHz" bands such as 3.5 GHz, but also in "Above 6 GHz" bands referred to as mmWave including 28 GHz and 39 GHz. In addition, it has been considered to implement 6G mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low-Latency Communications (URLLC), and massive Machine-Type Communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large scale antennas, metamaterial-based lenses and antennas for improving coverage of terahertz band signals, high-dimensional space multiplexing technology using Orbital Angular Momentum (OAM), and Reconfigurable Intelligent Surface (RIS) technology, but also full duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

The disclosure relates to a wireless communication system, and more particularly, to a method and device for energy saving of a network in a wireless communication system.

Specifically, in a case where a base station adjusts transmission parameters at short intervals in time for power saving and cell throughput and coverage management, related parameter configuration and signaling methods are provided.

[Technical Solution]

A method performed by a terminal in a wireless communication system according to an embodiment of the disclosure may comprise receiving, from a base station, a radio resource control (RRC) message including information indicating the number of ports, receiving, from the base station, a message for deactivating at least one port among ports corresponding in number to the number of ports, wherein the message includes resource allocation information in a frequency domain associated with the at least one port, receiving a channel state information reference signal (CSI-RS) from the base station via ports that are among the ports corresponding in number to the number of ports but exclude the at least one antenna port deactivated on the basis of the message, and reporting, to the base station, channel state information (CSI) acquired on the basis of the CSI-RS.

A method performed by a base station in a wireless communication system according to another embodiment of the disclosure may comprise transmitting, to a terminal, an RRC message including information indicating the number of ports, determining to deactivate at least one port among ports corresponding in number to the number of ports, transmitting, to the terminal, a message for deactivating the at least one port, wherein the message includes resource allocation information in a frequency domain associated with the at least one port, transmitting, to the terminal, an CSI-RS via ports that are among the ports corresponding in number to the number of ports but exclude the at least one antenna port deactivated on the basis of the message, and receiving, from the terminal, CSI on the basis of the CSI-RS.

A terminal in a wireless communication system according to another embodiment of the disclosure may comprise a transceiver and a controller functionally connected to the transceiver. The controller may be configured to receive, from a base station, an RRC message including information indicating the number of ports, receive, from the base station, a message for deactivating at least one port among ports corresponding in number to the number of ports, wherein the message includes resource allocation information in a frequency domain associated with the at least one port, receive an CSI-RS from the base station via ports that are among the ports corresponding in number to the number of ports but exclude the at least one antenna port deactivated on the basis of the message, and report, to the base station, CSI acquired on the basis of the CSI-RS.

A base station in a wireless communication system according to another embodiment of the disclosure may comprise a transceiver, and a controller functionally connected to the transceiver. The controller may be configured to transmit, to a terminal, an RRC message including information indicating the number of ports, determine to deactivate at least one port among ports corresponding in number to the number of ports, transmit, to the terminal, a message for deactivating the at least one port, wherein the message includes resource allocation information in a frequency domain associated with the at least one port, transmit, to the terminal, an CSI-RS via ports that are among the ports corresponding in number to the number of ports but exclude the at least one antenna port deactivated on the basis of the message, and receive, from the terminal, CSI on the basis of the CSI-RS.

The technical problems to be achieved in various embodiments of the disclosure are not limited to the technical problems mentioned above, and other technical problems not mentioned will be clearly understood by those skilled in the art to which the disclosure pertains from the description below.

[Advantageous Effects]

According to an embodiment of the disclosure, a base station can adjust transmission parameters to reduce energy consumption by using channel state information (CSI) related parameter configuration and signaling methods.

In addition, according to an embodiment of the disclosure, CSI of a suitable UE can be measured and reported to a base station based on the configured parameters.

The effects obtainable from the disclosure are not limited to the effects mentioned above, and other effects not mentioned will be clearly understood by those skilled in the art to which the disclosure belongs from the description below.

[Brief description of Drawings]

FIG. 1 is a diagram illustrating a basic structure of a time-frequency resource domain of a 5G system according to an embodiment of the disclosure.

FIG. 2 is a diagram illustrating a time domain mapping structure of a synchronization signal and a beam sweeping operation according to an embodiment of the disclosure.

FIG. 3 illustrates a random access procedure according to an embodiment of the disclosure.

FIG. 4 illustrates a procedure for a UE to report UE capability information to a base station according to an embodiment of the disclosure.

FIG. 5 illustrates the interrelationship between frequency bands, coverage, and bandwidth according to an embodiment of the disclosure.

FIG. 6 is a diagram illustrating an example of a base station deployment scenario according to an embodiment of the disclosure.

FIG. 7 is a diagram illustrating another example of a base station deployment scenario according to an embodiment of the disclosure.

FIG. 8A and FIG. 8B are diagrams for explaining a method for configuring CSI resources according to an embodiment of the disclosure.

FIG. 9 is a diagram for explaining related parameters included in CSI resource configurations according to an embodiment of the disclosure.

FIG. 10 illustrates an example of activating/deactivating CSI resources through MAC CE and DCI according to an embodiment of the disclosure.

FIG. 11A and FIG. 11B illustrate an example of a method for configurating CSI resources according to an embodiment of the disclosure.

FIG. 12 illustrates another example of a method for configuring CSI resources according to an embodiment of the disclosure.

FIG. 13 illustrates another example of a method for configuring CSI resources according to an embodiment of the disclosure.

FIG. 14 illustrates a signaling procedure of a UE and base station according to an embodiment of the disclosure.

FIG. 15 is a diagram illustrating a UE transceiver in a wireless communication system according to an embodiment of the disclosure.

FIG. 16 is a block diagram illustrating an internal structure of a UE according to an embodiment of the disclosure.

FIG. 17 is a block diagram illustrating an internal structure of a base station according to an embodiment of the disclosure

[Mode for Disclosure]

Hereinafter, embodiments of the disclosure are described in detail with reference to the accompanying drawings.

In describing embodiments, descriptions related to technical contents which are well-known in the art to which the disclosure pertains, and are not directly associated with the disclosure, will be omitted. Such an omission of unnecessary descriptions is intended to prevent obscuring of the main idea of the disclosure and more clearly convey the main idea.

For the same reason, some components in the accompanying drawings are exaggerated, omitted, or schematically illustrated, and a size of each component does not entirely reflect an actual size. The same reference number is given to the same or corresponding element in each drawing.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose and inform those skilled in the art of the scope of the disclosure, and the disclosure is defined solely by the scope of the claims. Throughout the specification, the same or like reference numerals designate the same or like elements.

Herein, it will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable data processing apparatus to produce a computer implemented process such that the instructions that execute on the computer or other programmable data processing apparatus provide steps for implementing the functions specified in the flowchart block(s).

Further, each block may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software or a hardware components, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the 'unit' includes, for example, components such as software components, object-oriented software components, class components, and task components, processes, functions, properties, procedures, sub-routines, segments of a program code, drivers, firmware, micro-codes, circuits, data, database, data structures, tables, arrays, and parameters. The components and functions provided by the 'unit' may be either combined into a smaller number of components and a 'unit', or divided into additional components and a 'unit'. Moreover, the components and 'units' may be implemented to execute one or more CPUs within a device or a security multimedia card. Further, in the embodiments, the '~unit' may include one or more processors.

The following detailed description of embodiments of the disclosure is directed to New RAN (NR) as a radio access network and packet core as a core network (5G system, 5G Core Network, or new generation core (NG Core)) which are specified in the 5G mobile communication standards disclosed by the 3rd generation partnership project long term evolution (3GPP LTE) that is a mobile communication standardization group, but based on determinations by those skilled in the art, the main idea of the disclosure may be applied to other communication systems having similar technical backgrounds through some modifications without significantly departing from the scope of the disclosure.

In a 5G system, in order to support network automation, a network data collection and analysis function (NWDAF), which is a network function that provides a function of analyzing and providing data collected from a 5G network, may be defined. The NWDAF can collect/storage/analyze information from the 5G network to provide the result to an unspecified network function (NF), and the analysis result can be used independently in each NF.

In the following description, the disclosure will be described using terms and names defined in the 3GPP standards (5G, NR, LTE, or other similar system standards) for the convenience of description. However, the disclosure is not limited by these terms and names, and may be applied in the same way to systems that conform other standards.

Further, in the following description, terms for identifying access nodes, terms with reference to network entities, terms with reference to messages, terms with reference to interfaces between network entities, terms with reference to various identification information, and the like are illustratively used for the sake of convenience. Therefore, the disclosure is not limited by the terms as used below, and other terms with reference to subjects having equivalent technical meanings may be used.

In order to meet wireless data traffic demands that have increased after 4G communication system commercialization, efforts to develop an improved 5G communication system (New Radio (NR)) have been made. The 5G communication system has been designed to also support a mmWave band (for example, a frequency band of 28 GHz) in order to achieve a high data transmission rate. In the 5G communication system, technologies such as beamforming, massive MIMO, Full Dimensional MIMO (FD-MIMO), array antenna, analog beam-forming, and large scale antenna are discussed to mitigate a propagation path loss in the mmWave band and increase a propagation transmission distance. In addition, unlike LTE, the 5G communication system supports various subcarrier spacings such as 30 kHz, 60 kHz, and 120 kHz including 15 kHz, and a physical control channel uses polar coding and a physical data channel uses a Low Density Parity Check (LDPC). Furthermore, as waveforms for uplink transmission, not only a CP-OFDM but also a DFT-S-OFDM is used. While LTE supports HARQ (hybrid ARQ) retransmission in units of transport blocks (TBs), 5G may additionally support HARQ retransmission based on a code block group (CBG) in which several code blocks (CBs) are bundled.

Further, to improve a network of the system, in the 5G communication system, technologies such as an evolved small cell, an advanced small cell, a cloud radio access network (cloud RAN), an ultra-dense network, a device to device communication (D2D), a wireless backhaul, a vehicle communication network (Vehicle to Everything (V2X) network), cooperative communication, coordinated multi-points (CoMP), and reception interference cancellation have been developed.

Meanwhile, the Internet is evolved from a human-centered connection network through which a human being generates and consumes information to the Internet of Things (IoT) network that transmits/receives information between distributed components such as things and processes the information. The Internet of Everything (IoE) technology in which the big data processing technology, etc., is combined with the IoT technology by connection with a cloud server, etc. has also emerged. To implement the IoT, technology elements, such as a sensing technology, wired and wireless communication and network infrastructure, a service interface technology, and a security technology, are required. Recently, technologies such as a sensor network, machine to machine (M2M), and machine type communication (MTC) for connecting between things has been researched. In the IoT environment, an intelligent Internet technology (IT) service that creates a new value in human life by collecting and analyzing data generated in the connected things may be provided. The IoT may be applied to fields, such as a smart home, a smart building, a smart city, a smart car or a connected car, a smart grid, health care, smart appliances, and an advanced healthcare service, by fusing and combining the existing information technology (IT) with various industries.

In line with this, various attempts have been made to apply 5G communication systems to IoT networks. For example, technologies such as a sensor network, Machine-to-Machine (M2M) communication, and Machine Type Communication (MTC), and may be implemented by technique such as beamforming, MIMO, and array antennas. Application of a cloud Radio Access Network (RAN) as the above-described Big Data processing technology may also be considered to be as an example of convergence between the 5G technology and the IoT technology. As such, in a communication system, a plurality of services may be provided to a user, and to provide the plurality of services to the user, a method for providing each service in the same time period according to the characteristics and an apparatus using the method is required. Various services provided in a 5G communication system are being studied, and one of them is a service that satisfies requirements of low latency and high reliability. In addition, the demand for mobile services is exploding, and location-based services (LBSs), which are mainly driven by two main requirements, i.e., emergency services and commercial applications, are rapidly growing. In particular, in communication using a sidelink, an NR sidelink system supports unicast communication, groupcast (or multicast) communication, and broadcast communication between UEs. In addition, unlike LTE sidelinks that aim to transmit and receive basic safety information required for driving a vehicle on a road, NR sidelinks aim to provide more advanced services such as platooning, advanced driving, extended sensor, and remote driving.

In particular, the importance of increasing the energy saving effect by having the base station rapidly change the transmission power of the downlink common signal is being highlighted. In general, the transmission power of the downlink common signal (e.g., PSS, SSS, PBCH, CSI-RS, etc.) transmitted by the base station is determined once in consideration of cell coverage, etc. at the base station installation stage, and is maintained as is unless there are special cases. However, in a case where power saving for the base station is required, the base station may consider a method for increasing the energy saving effect by rapidly changing the transmission power of the downlink common signal. As an example of a commercial 5G base station, the base station may be equipped with 64 transmit antennas and corresponding 64 power amplifiers in a 3.5 GHz frequency band and may operate in a bandwidth of 100 MHz. As a result, the amount of power consumption of the base station increases in proportion to the output of the power amplifier and the operating time of the power amplifier. Compared to an LTE base station, a 5G base station has a relatively high operating frequency band, so it has the characteristics of a wide bandwidth and a large number of transmit antennas. According to these characteristics, there is an effect of increasing the data rate, but at the cost of increasing the amount of power consumption of the base station. Therefore, the more the base stations there are in the mobile communication network, the more the power consumption of the entire mobile communication network increases proportionally. Accordingly, the base station can adjust the transmission parameters to reduce the power consumption. However, although the power consumption of the base station can be reduced by adjusting the transmission parameters for power saving, the cell throughput and coverage can be reduced. As a method to overcome this, the transmission parameters can be adjusted at short intervals such as a Transmission Time Interval (TTI) and the symbol level to minimize the reduction in the cell throughput and coverage.

In this disclosure, as described above, in order to reduce the energy consumption of a base station, a parameter configuration and signaling method by a base station is proposed to adjust Channel State Information (CSI) related parameters at short intervals in time. Specifically, the corresponding parameters may include CSI-RS related resource configuration information, a period, the number of CSI-RS ports, a frequency domain in which the CSI-RS is transmitted, etc. In a case where the CSI-related parameter configuration and signaling method proposed in the disclosure is applied so that the base station adjusts transmission parameters to reduce energy consumption, it may be possible to measure the CSI of a suitable UE and report the measured CSI to the base station.

The embodiment of the disclosure is proposed to support the above-described scenario, and in particular, it aims to provide a method for adjusting transmission parameters at short intervals in time for power saving of the base station and cell throughput and coverage managements.

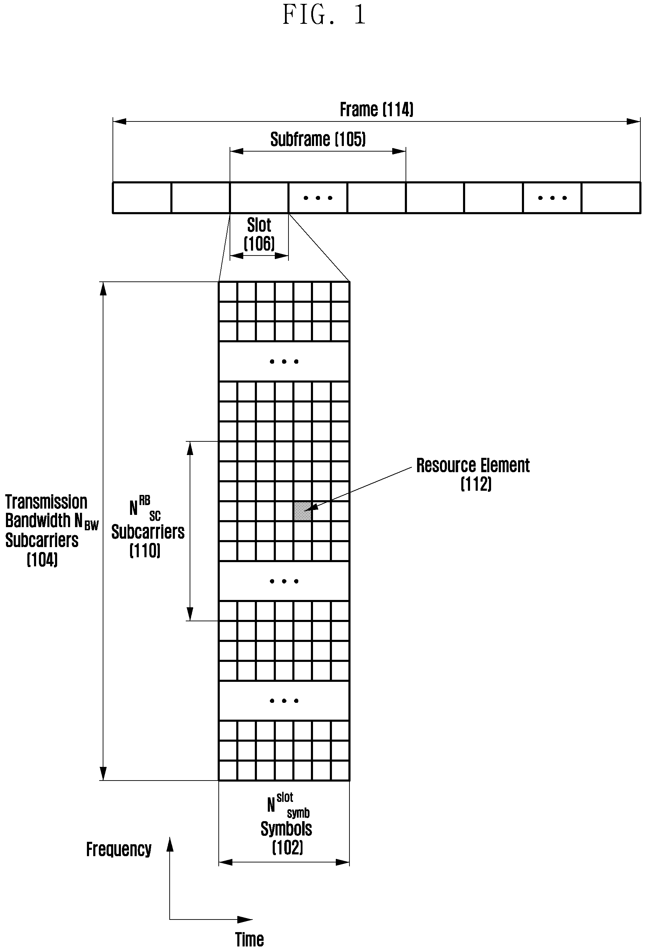

FIG. 1 is a diagram illustrating a basic structure of a time-frequency resource domain of a 5G system according to an embodiment of the disclosure. That is, FIG. 1 is a diagram illustrating a basic structure of a time-frequency resource domain, which is a radio resource domain in which the data or control channels of a 5G system are transmitted.

With reference to FIG. 1, the horizontal axis represents a time domain and the vertical axis represents a frequency domain. The smallest transmission unit in the time domain in a 5G system is an orthogonal frequency division multiplexing (OFDM) symbol, a number of $N_{symb}^{slot}$ 102 may be grouped to constitute one slot 106, and a number of $N_{slot}^{subframe}$ slots may be grouped to constitute one subframe 105. One subframe 105 may have a length of 1.0 ms, and 10 subframes may be grouped to constitute a 10ms frame 114. The smallest transmission unit in the frequency domain is a subcarrier, and an overall system transmission bandwidth may be constituted with a total of $N_{BW}$ subcarriers 104.

A basic resource unit in the time-frequency domain is a resource element (RE) 112 that may be represented by an OFDM symbol index and a subcarrier index. A resource block (RB or physical resource block (PRB)) may be defined as $N_{SC}^{RB}$ consecutive sub-carriers 110 in the frequency domain. In the 5G system, $N_{SC}^{RB} = 12$, and a data rate may increase in proportion to the number of RBs scheduled to a UE.

In the 5G system, a base station may map data in units of an RB and generally perform scheduling for a certain UE in units of an RB constituting one slot. In other words, in the 5G system, a basic time unit for scheduling may be a slot, and a basic frequency unit for scheduling may be an RB.

The number $N_{symb}^{slot}$ of OFDM symbols is determined based on a length of a cyclic prefix (CP) added to each symbol to prevent inter-symbol interference, and for example, $N_{symb}^{slot} = 14$ when a normal CP is applied, and $N_{symb}^{slot} = 12$ when an extended CP is applied. The extended CP may be applied to a system having a relatively long radio wave transmission distance compared to that for the normal CP, thereby maintaining orthogonality between symbols. For the normal CP, a ratio of a CP length to a symbol length may be maintained at a constant value to keep an overhead due to the CP constant regardless of a subcarrier spacing. In other words, as a subcarrier spacing becomes narrower, a symbol length becomes longer, and accordingly, a CP length may become longer. On the other hand, as a subcarrier spacing becomes wider, a symbol length becomes shorter, and accordingly, a CP length may become shorter. A symbol length and a CP length may be inversely proportional to a subcarrier spacing.

In the 5G system, in order to satisfy various services and requirements, various frame structures may be supported by adjusting a subcarrier spacing. For example, in terms of an operating frequency band, a wider subcarrier spacing is more beneficial for recovery from phase noise in a high frequency band. For example, in terms of a transmission time, when a subcarrier spacing becomes wider, a symbol length in the time domain is shortened, which leads to a shorter slot, and thus, it is advantageous for supporting ultra-low latency services such as URLLC. For example, in terms of cell size, a larger cell may be supported as a CP length becomes longer, and thus, as a subcarrier becomes narrower, a relatively larger cell may be supported. A cell is a concept indicating an area covered by one base station in mobile communication.

The subcarrier spacing, the CP length, etc. are essential information for OFDM transmission and reception, and the base station and UE need to recognize the subcarrier spacing, the CP length, etc. as a common value to enable seamless transmission and reception.

Table 1 shows a relationship among a subcarrier spacing configuration μ, a subcarrier spacing Δf, and a CP length supported by the 5G system.

[Table 1]

| μ | Δf = $2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

Table 2 shows the number $N_{symb}^{slot}$ of symbols per slot, the number $N_{slot}^{frame,\mu}$ of slots per frame, and the number $N_{slot}^{subframe,\mu}$ of slots per subframe for each subcarrier spacing configuration μ in the case of a normal CP, respectively.

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 shows the number $N_{symb}^{slot}$ of symbols per slot, the number $N_{slot}^{frame,\mu}$ of slots per frame, and the number $N_{slot}^{frame,\mu}$ of slots per subframe for each subcarrier spacing configuration $\mu$ in the case of an extended CP, respectively.

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

At an early stage of introduction of the 5G system, at least coexistence or dual mode operation with a legacy LTE or/and LTE-A system (hereinafter referred to as LTE/LTE-A) is expected. As a result, the legacy LTE/LTE-A system may provide a stable system operation to the UE, and the 5G system may provide enhanced services to the UE. Therefore, a frame structure of the 5G system needs to include at least a frame structure or essential parameter set (subcarrier spacing=15 kHz) of the LTE/LTE-A system.

For example, when comparing the frame structure with subcarrier spacing configuration $\mu$=0 (hereinafter referred to as frame structure A) and the frame structure with subcarrier spacing configuration $\mu$=1 (hereinafter referred to as frame structure B), in the frame structure B compared to the frame structure A, the subcarrier spacing and a size of an RB are increased to be twice as large, and a slot length and a symbol length are decreased to be twice as small. In case of frame structure B, two slots may constitute one subframe, and 20 subframes may constitute one frame.

When the frame structure of the 5G system is normalized, a subcarrier spacing, a CP length, a slot length, and the like, which are an essential parameter set, may have the integer-multiple relation therebetween according to each frame structure, so as to provide high scalability. In addition, to indicate a reference time unit unrelated to the frame structure, a subframe having a fixed length of 1 ms may be defined.

The frame structure of the 5G system may be applied to correspond to various scenarios. In view of a cell size, when a CP length is longer, a larger cell may be supported, and thus the frame structure A may support a relatively large cell, compared to the frame structure B. In view of an operating frequency band, when subcarrier spacing is wider, it is advantageous for recovery from phase noise of a high frequency band, and thus the frame structure B may support a relatively high operating frequency, compared to the frame structure A. In view of a service, since a shorter length of a slot serving as a basic time unit for scheduling is advantageous to support an ultra-low latency service such as URLLC, the frame structure B may be appropriate for the URLLC service as compared to the frame structure A.

Hereinafter, in the description of the disclosure, an uplink (UL) may refer to a radio link for transmitting data or a control signal from a UE to a base station, and a downlink (DL) may refer to a radio link for transmitting data or a control signal from the base station to the UE.

In an initial access operation when the UE accesses the system for the first time, the UE may establish DL time/frequency synchronization from a synchronization signal transmitted by the base station through cell search, and may obtain cell identity (ID). In addition, the UE may receive a physical broadcast channel (PBCH) by using the obtained cell ID, and may obtain a master information block (MIB), which is essential system information, from the PBCH. Additionally, the UE may receive a system information block (SIB) transmitted by the base station to obtain cell common transmission/reception related control information. The cell common transmission/reception related control information may include random access related control information, paging related control information, common control information for various physical channels, and the like.

A synchronization signal is a reference signal for the cell search, and a subcarrier spacing appropriate for a channel environment such as phase noise and the like may be applied per frequency band. A different subcarrier spacing may be applied to the data or control channel based on a service type to support various services as described above.

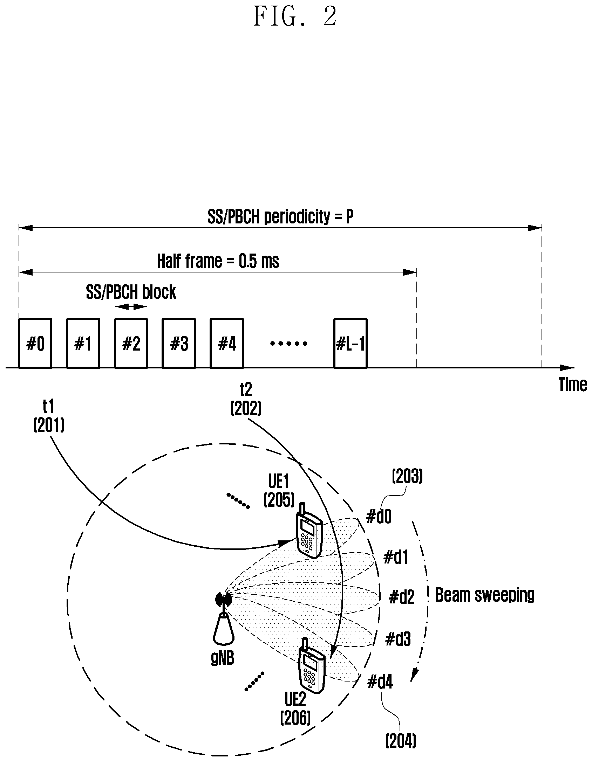

FIG. 2 is a diagram illustrating a time domain mapping structure of a synchronization signal and a beam sweeping operation according to an embodiment of the disclosure.

For the sake of explanation of FIG. 2, the following components may be defined.

- Primary Synchronization Signal (PSS): This signal serves as a reference for DL time/frequency synchronization and provides some information about cell ID.
- Secondary Synchronization Signal (SSS): This signal serves as a reference for DL time/frequency synchronization, and provides some remaining information about cell ID. Additionally, this signal may serve as a reference signal for demodulation of the PBCH.
- Physical Broadcast Channel (PBCH): It provides a master information block (MIB) which is essential system information required for transmission or reception of a data channel and control channel of a UE. The master information block (MIB) may include search space related control information indicating radio resource mapping information of a control channel, scheduling control information for a separate data channel for transmission of system information, information such as system frame number (SFN), which is a frame unit index serving as a timing reference, and the like.
- Synchronization Signal/PBCH Block (SS/PBCH block or SSB): A SS/PBCH block is constituted of N OFDM symbols and includes a combination of a PSS, an SSS, and a PBCH and the like. In a case of a system to which beam sweeping technology is applied, the SS/PBCH block is the smallest unit to which beam sweeping is applied. In the 5G system, it may be that N=4. The base station may transmit up to L SS/PBCH blocks, and the L SS/PBCH blocks are mapped within a half frame (0.5 ms). In addition, the L SS/PBCH blocks are periodically repeated in units of a predetermined periodicity P. The periodicity P may be notified by the base station to the UE through signaling. In a case where there is no separate signaling for the periodicity P, the UE applies a predetermined default value. Each SS/PBCH block has an SS/PBCH block index from 0 to a maximum of L-1, and the UE can know the SS/PBCH block index through SS/PBCH detection.

With reference to FIG. 2, beam sweeping may be applied in units of SS/PBCH blocks according to the passage of time. Specifically, UE1 205 receives the SS/PBCH block using a beam emitted in a direction #d0 203 by beamforming applied to a SS/PBCH block #0 at time t1 201. In addition, UE2 206 receives the SS/PBCH block using a beam emitted in a direction #d4 204 by beamforming applied to a SS/PBCH block #4 at time t2 202. The UE may obtain, from the base station, an optimal synchronization signal through a beam, which is emitted in a direction in which the UE is located. For example, it may be difficult for the UE 1 205 to obtain time/frequency synchronization and essential system information from the SS/PBCH block through a beam emitted in a direction #d4 away from the location of the UE 1.

In addition to the initial access procedure, the UE may receive the SS/PBCH block in order to determine whether radio link quality of the current cell is maintained at a predetermined level or more. In addition, in a procedure in which the UE performs handover from a current cell to a neighboring cell, the UE may receive the SS/PBCH block of the neighboring cell in order to determine the radio link quality of the neighboring cell and obtain time/frequency synchronization of the neighboring cell.

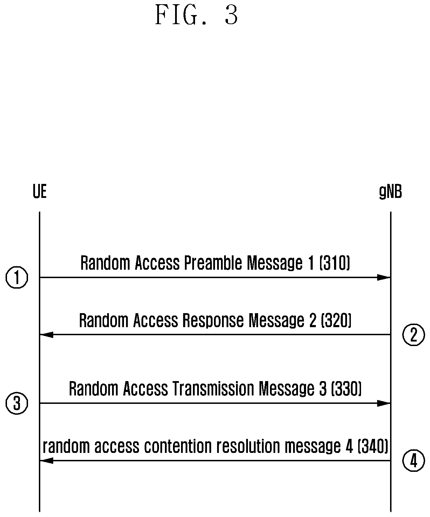

After the UE acquires MIB and system information from the base station through the initial access procedure, the UE may perform a random access procedure to switch the link with the base station to a connected state (or RRC_CONNECTED state). Upon completion of the random access procedure, the UE is switched to a connected state, and one-to-one communication is enabled between the base station and the UE. Hereinafter, a random access procedure will be described in detail In FIG. 3 .

FIG. 3 illustrates a random access procedure according to an embodiment of the disclosure.

With reference to FIG. 3, in first operation 310 of a random access procedure, the UE may transmit a random access preamble to the base station. In the random access procedure, the random access preamble, which is the first message transmitted by the UE, may be referred to as message 1. The base station may measure a transmission delay value between the UE and the base station from the random access preamble and establish UL synchronization. In this case, the UE may randomly select a random access preamble to use in a random access preamble set given by the system information in advance. In addition, the initial transmission power of the random access preamble may be determined according to a pathloss between the base station and the UE, wherein the pathloss is measured by the UE. In addition, the UE may transmit the random access preamble by determining the transmission beam direction of the random access preamble based on a synchronization signal received from the base station.

In a second operation 320, the base station may transmit a UL transmission timing adjustment command to the UE based on the transmission delay value measured from the random access preamble received in the first operation 310. In addition, the base station may transmit a UL resource and a power control command to be used by the UE as scheduling information. Control information for a UL transmission beam of the UE may be included in the scheduling information.

If the UE cannot receive a random access response (RAR) (or message 2), which is scheduling information for message 3, from the base station within a predetermined period of time in the second operation 320, the UE may proceed the first operation 310 again. In a case where the first operation 310 is performed again, the UE increases the random access preamble transmission power by a predetermined operation and transmits the same (power ramping), thereby increasing the random access preamble reception probability of the base station.

In the third operation 330, the UE may transmit UL data (message 3) including the UE ID of the UE itself to the base station by using the UL resource, which is allocated in the second operation 320, through a UL data channel (physical uplink shared channel (PUSCH)). The transmission timing of the UL data channel for transmission of message 3 may follow the timing control command, which has been received from the base station in the second operation 320. In addition, the transmission power of the UL data channel for transmission of message 3 may be determined by considering the power ramping value of the random access preamble and the power control command, which are received from the base station in the second operation 320. The UL data channel for transmission of message 3 may refer to the first UL data signal transmitted by the UE to the base station after transmission of the random access preamble by the UE.

In a fourth operation 340, when it is determined that the UE has performed random access without collision with another UE, the base station may transmit data (message 4) including the ID of the UE, which has transmitted UL data in the third operation 330, to the corresponding UE. When a signal, which has been transmitted by the base station in the fourth operation 340, is received from the base station, the UE may determine that the random access is successful. In addition, the UE may transmit HARQ-ACK information indicating whether message 4 has been successfully received, to the base station through an UL control channel (physical uplink control channel (PUCCH)).

If the base station fails to receive the data signal from the UE because the data transmitted by the UE in the third operation 330 collides with the data of the other UE, the base station may not perform any more data transmission to the UE. Accordingly, when the UE fails to receive the data, which is transmitted from the base station in the fourth operation 340, within a predetermined period of time, it may be determined that the random access procedure has failed and process may start again from the first operation 310.

Upon successful completion of the random access procedure, the UE is switched to a connected state, and one-to-one communication between the base station and the UE may be possible. The base station may receive a report of UE capability information from the UE in the connected state, and may adjust scheduling with reference to the UE capability information of the corresponding UE. The UE may inform the base station of whether the UE itself supports a predetermined function, the maximum allowable value of the function supported by the UE, and the like, through the UE capability information. Accordingly, the UE capability information reported by each UE to the base station may be a different value for each UE.

As an example, the UE may report UE capability information including at least a part of the following control information, as the UE capability information, to the base station.

- Control information related to a frequency band supported by the UE.
- Control information related to a channel bandwidth supported by the UE.
- Control information related to a maximum modulation scheme supported by the UE.
- Control information related to the maximum number of beams supported by the UE.
- Control information related to the maximum number of layers supported by the UE.
- Control information related to CSI reporting supported by the UE.
- Control information relating to whether the UE supports frequency hopping.
- Bandwidth related control information when carrier aggregation (CA) is supported, and/or
- Control information relating to whether cross carrier scheduling is supported when CA is supported.

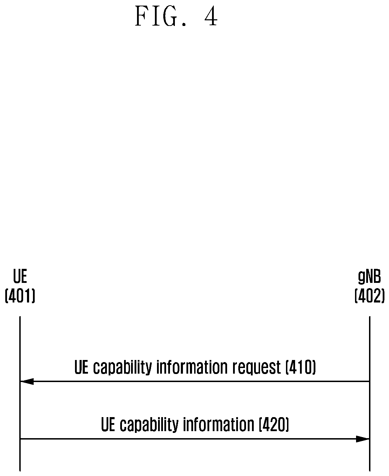

FIG. 4 illustrates a procedure in which a UE reports UE capability information to a base station according to an embodiment of the disclosure.

With reference to FIG. 4, in an operation 410, a base station 402 may transmit a UE capability information request message to a UE 401. In response to a request for UE capability information from the base station, the UE may transmit UE capability information to the base station in operation 420.

Hereinafter, a scheduling method in which a base station transmits DL data to a UE or indicates the UE to transmit UL data will be described.

Downlink Control Information (DCI) is control information transmitted by a base station to a UE through the DL and may include DL data scheduling information or UL data scheduling information regarding a predetermined UE. In general, the base station may independently perform channel coding of DCI for each UE, and then may transmit the channel-coded DCI to each UE through the Physical Downlink Control Channel (PDCCH), which is a DL physical control channel.

The base station may operate for a UE to be scheduled, by applying a certain DCI format determined depending on a purpose such as whether it is scheduling information about DL data (downlink assignment) or scheduling information about UL data (Uplink grant), whether the DCI is for power control.

The base station may transmit, to the UE, DL data through a Physical Downlink Shared Channel (PDSCH), which is a physical channel for DL data transmission. The base station may inform of the UE scheduling information, such as a specific mapping position in the time and frequency domain of the PDSCH, a modulation scheme, HARQ-related control information, and power control information, through DCI related to scheduling information for DL data in the DCI that is transmitted through the PDCCH.

The UE may transmit, to the base station, UL data through a Physical Uplink Shared Channel (PUSCH), which is a physical channel for UL data transmission. The base station may inform of the UE scheduling information, such as a specific mapping position in the time and frequency domain of the PUSCH, a modulation scheme, HARQ-related control information, and power control information, through DCI related to scheduling information for UL data in the DCI that is transmitted through the PDCCH.

The time-frequency resource to which the PDCCH is mapped is called Control Resource Set (CORESET). CORESET can be configured to all or part of the frequency resources of the bandwidth supported by the UE in the frequency domain. In the time domain, it can be configured to one or more OFDM symbols, which can be defined as the CORESET length (Control Resource Set Duration). The base station may configure one or more CORESETs to the UE through a higher layer signaling (e.g., system information, master information block (MIB), radio resource control (RRC) signaling). Configurating the CORESET to the UE may mean providing information such as a CORESET identity, a frequency position of the CORESET, and a symbol length of the CORESET. The information provided to the UE by the base station to configure the CORESET may include at least some information about the information included in Table 4.

[Table 4]

| | |
|---|---|
| ControlResourceSet ::= | SEQUENCE { |
|    controlResourceSetId | ControlResourceSetId, |
|    (CORESET identity) | |
|    frequencyDomainResources | BIT STRING (SIZE (45)), |
|    (frequency domain resource) | |
|    duration | INTEGER (1..maxCoReSetDuration), |
|    (CORESET duration) | |
|    cce-REG-MappingType | CHOICE { |
|    (CCE-to-REG mapping type) | |
|      interleaved | SEQUENCE { |
|       reg-BundleSize | ENUMERATED {n2, n3, n6}, |
|       (REG bundle size) | |

```
                    interleaverSize          ENUMERATED {n2, n3, n6},

                    (interleaver size)

                    shiftIndex               INTEGER(0..maxNrofPhysicalResourceBlocks-1)
OPTIONAL -- Need S

                    (interleaver shift)

                    },

                    nonInterleaved                   NULL

                },

                precoderGranularity          ENUMERATED {sameAsREG-bundle,
allContiguousRBs},

                (precoding granularity)

                tci-StatesPDCCH-ToAddList       SEQUENCE(SIZE (1..maxNrofTCI-
StatesPDCCH)) OF TCI-StateId OPTIONAL, -- Cond NotSIB1-initialBWP

                (QCL cofiguration information)

                    tci-StatesPDCCH-ToReleaseList   SEQUENCE(SIZE (1..maxNrofTCI-
StatesPDCCH)) OF TCI-StateId OPTIONAL, -- Cond NotSIB1-initialBWP

                (QCL cofiguration information)

                tci-PresentInDCI                 ENUMERATED {enabled}
OPTIONAL, -- Need S

                (QCL indicator cofiguration information in DCI)

                pdcch-DMRS-ScramblingID          INTEGER (0..65535)
OPTIONAL, -- Need S

                (PDCCH DMRS scrambling identity)


            }
```

A CORESET may be constituted with $N_{RB}^{CORESET}$ RBs in the frequency domain and $N_{symb}^{CORESET} \in \{1,2,3\}$ symbols in the time domain. The NR PDCCH may be constituted with one or more control channel elements (CCEs). One CCE may be constituted with six Resource Element Groups (REGs), and an REG may be defined as one RB during one OFDM symbol. In one CORESET, REGs may be indexed in time-first order, starting with REG index 0 from the lowest RB in the first OFDM symbol of the CORESET.

An interleaved scheme and a non-interleaved scheme may be supported to transmit a PDCCH. The base station may configure for the UE whether to transmit the PDCCH in the interleaved or non-interleaved scheme on a CORESET basis by higher layer signaling. Interleaving may be performed in units of an REG bundle. An REG bundle may be defined as a set of one or multiple REGs. The UE may determine a CCE-to-REG mapping scheme for a corresponding CORESET based on the interleaved or non-interleaved transmission scheme configured by the base station in the manner described in Table 5 below.

[Table 5]

The CCE-to-REG mapping for a control-resource set can be interleaved or non-interlea ved and is described by REG bundles:

- REG bundle i is defined as REGs {$_iL,_iL$+1,...,$i_L$+L-1} where L is the REG bundl e size,

$$i = 0,1, ..., N_{REG}^{CORESET}/L - 1 \text{, and } N_{REG}^{CORESET} = N_{RB}^{CORESET} N_{symb}^{CORESET} \text{ is the nu mber of REGs}$$

in the CORESET

- CCE $_j$ consists of REG bundles {f(6j/L),f(6j/L+1),...,f(6j/L+6/L-1)} where f(·) is an interleaver

For non-interleaved CCE-to-REG mapping, L = 6 and f(x) = x.

For interleaved CCE-to-REG mapping, L ∈ {2,6}for $N_{symb}^{CORESET} = 1$ and L ∈ $\{N_{symb}^{CORESET}, 6\}$ for $N_{symb}^{CORESET} \in$ {2,3}. The interleaver is defined by

$$f(x) = (rC + c + n_{shift}) \bmod \left(N_{REG}^{CORESET}/L\right)$$

$$x = cR + r$$
$$r = 0,1, ... , R - 1$$
$$c = 0,1, ... , C - 1$$

$$C = N_{REG}^{CORESET}/(LR)$$

where R ∈ {2,3,6}.

The base station may indicate configuration information such as a symbol to which the PDCCH is mapped in a slot and a transmission period of the PDCCH to the UE through signaling.

Next, the search space of PDCCH will be described.

The number of CCEs required to transmit a PDCCH may be 1, 2, 4, 8, or 16 according to an aggregation level (AL), and different numbers of CCEs may be used for link adaptation of a DL control channel. For example, in case of AL=L, one DL control channel may be transmitted in L CCEs. Without information about the DL control channel, the UE performs blind decoding to detect a signal. For the blind decoding, a search space being a set of CCEs may be defined. The search space is a set of DL control channel candidates including CCEs that the UE should attempt to decode at a given AL. There are various ALs at which 1, 2, 4, 8, and 16 CCEs are bundled to form one bundle, and thus the UE may have a plurality of search spaces. A search space set may be defined as a set of search spaces for all configured ALs.

Search spaces may be classified into a common search space (CSS) and a UE-specific search space (USS). A certain group of UEs or all UEs may monitor the CSS of a PDCCH to receive cell-common control information such as dynamic scheduling of a System Information Block (SIB) or a paging message. For example, the UE may receive scheduling assignment information about a PDSCH for system information reception by monitoring the CSS of the PDCCH. In the case of CSS, since a certain group of UEs or all UEs should receive the PDCCH, the CSS may be defined as a set of preset CCEs. The UE may receive scheduling assignment information about a UE-specific PDSCH or PUSCH by monitoring an USS of the PDCCH. The USS may be UE-specifically defined by a function of a UE Identity (ID) and various system parameters.

The base station may configure configuration information about a search space of a PDCCH for the UE through higher layer signaling (e.g., an SIB, an MIB, or RRC signaling). For example, the base station may configure the UE with the number of PDCCH candidate groups for each aggregation level L, the monitoring periodicity of a search space, a monitoring occasion in symbol unit in a slot for the search space, a search space type (CSS or USS), a combination of a DCI format and RNTI to be monitored in the search space, and a CORESET index to be monitored in the search space. For example, parameters for a PDCCH search space may include information described in Table 6 below.

[Table 6]

```
SearchSpace ::=                    SEQUENCE {
    searchSpaceId                      SearchSpaceId,
    (search space identity)
    controlResourceSetId               ControlResourceSetId
OPTIONAL,      -- Cond SetupOnly
    (CORESET identify)
    monitoringSlotPeriodicityAndOffset CHOICE {
    (monitoring slot level periodicity and offset)
        sl1                            NULL,
        sl2                            INTEGER (0..1),
        sl4                            INTEGER (0..3),
        sl5                            INTEGER (0..4),
        sl8                            INTEGER (0..7),
        sl10                           INTEGER (0..9),
        sl16                           INTEGER (0..15),
        sl20                           INTEGER (0..19),
        sl40                           INTEGER (0..39),
        sl80                           INTEGER (0..79),
        sl160                          INTEGER (0..159),
```

```
            sl320                          INTEGER (0..319),

            sl640                          INTEGER (0..639),

            sl1280                         INTEGER (0..1279),

            sl2560                         INTEGER (0..2559)

        }

OPTIONAL,      -- Cond Setup

        duration                          INTEGER (2..2559)

OPTIONAL,      -- Need R

    (monitoring length)

    monitoringSymbolsWithinSlot           BIT STRING (SIZE (14))

OPTIONAL,      -- Cond Setup

    (monitoring symbol location in slot)

    nrofCandidates                        SEQUENCE {

    (number of PDCCH candidates for each aggregation level)

        aggregationLevel1                 ENUMERATED {n0, n1, n2, n3, n4,
n5, n6, n8},

        aggregationLevel2                 ENUMERATED {n0, n1, n2, n3, n4,
n5, n6, n8},

        aggregationLevel4                 ENUMERATED {n0, n1, n2, n3, n4,
n5, n6, n8},

        aggregationLevel8                 ENUMERATED {n0, n1, n2, n3, n4,
n5, n6, n8},
```

```
        aggregationLevel16                ENUMERATED {n0, n1, n2, n3, n4, n5,
n6, n8}

        }

OPTIONAL,      -- Cond Setup

    searchSpaceType                       CHOICE {
    (search space type)

        common                            SEQUENCE {
```

```
                (common search space)
                        dci-Format0-0-AndFormat1-0                SEQUENCE {

                            ...

                        }
    OPTIONAL,        -- Need R
                        dci-Format2-0                             SEQUENCE {
                            nrofCandidates-SFI                        SEQUENCE {
                                aggregationLevel1                         ENUMERATED {n1,
    n2}        OPTIONAL,        -- Need R
                                aggregationLevel2                         ENUMERATED {n1,
    n2}        OPTIONAL,        -- Need R
                                aggregationLevel4                         ENUMERATED {n1,
    n2}        OPTIONAL,        -- Need R
                                aggregationLevel8                         ENUMERATED {n1,
    n2}        OPTIONAL,        -- Need R
                                aggregationLevel16                        ENUMERATED {n1,
    n2}        OPTIONAL        -- Need R
                            },

                            ...

                        }
    OPTIONAL,        -- Need R
                        dci-Format2-1                             SEQUENCE {

                            ...

                        }
    OPTIONAL,        -- Need R
                        dci-Format2-2                             SEQUENCE {

                            ...

                        }
    OPTIONAL,        -- Need R
                        dci-Format2-3                             SEQUENCE {
```

```
                    dummy1                        ENUMERATED {sl1,
sl2, sl4, sl5, sl8, sl10, sl16, sl20}   OPTIONAL,      -- Cond Setup
                    dummy2                        ENUMERATED {n1,
n2},

            ...
```

```
     }
OPTIONAL        -- Need R
                },
                ue-Specific                    SEQUENCE {
            (UE-specific search space)
                    dci-Formats                      ENUMERATED
{formats0-0-And-1-0, formats0-1-And-1-1},

                    ...,


                }
            }
OPTIONAL        -- Cond Setup2
}
```

According to the configuration information, the base station may configure one or a plurality of search space sets for the UE. According to an embodiment, the base station may configure search space set 1 and search space set 2 for the UE. In search space set 1, the UE may be configured to monitor DCI format A scrambled with an X-RNTI in a CSS, and in search space set 2, the UE may be configured to monitor DCI format B scrambled with a Y-RNTI in an USS.

According to the configuration information, one or a plurality of search space sets may exist in the CSS or the USS. For example, search space set #1 and search space set #2 may be configured as the CSS, and search space set #3 and search space set #4 may be configured as the USS.

In the CSS, the UE may monitor the following DCI format and RNTI combinations, but that the disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the USS, the UE may monitor the following DCI format and RNTI combinations. The disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs may be defined and used as follows.

17

Cell RNTI (C-RNTI): Purpose for UE-specific PDSCH or PUSCH scheduling

Temporary Cell RNTI (TC-RNTI): Purpose for UE-specific PDSCH scheduling

Configured Scheduling RNTI (CS-RNTI): Purpose for semi-statically configured UE-specific PDSCH scheduling

Random Access RNTI (RA-RNTI): Purpose for PDSCH scheduling in the random access stage

Paging RNTI (P-RNTI): Purpose for PDSCH scheduling for paging transmission

System Information RNTI (SI-RNTI): Purpose for PDSCH scheduling for system information transmission

Interruption RNTI (INT-RNTI): Purpose to indicate whether PDSCH is punctured

Transmit Power Control for PUSCH RNTI (TPC-PUSCH-RNTI): Purpose to indicate power control command for PUSCH

Transmit Power Control for PUCCH RNTI (TPC-PUCCH-RNTI): Purpose to indicate power control command for PUCCH

Transmit Power Control for SRS RNTI (TPC-SRS-RNTI): Purpose to indicate power control command for SRS

The above-described DCI formats may follow the definitions shown in Table 7 below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

A search space for an aggregation level L in a CORESET p and a search space set s may be expressed in Equation (1).

[Equation 1]

$$L \cdot \left\{ \left( Y_{p,n_{s,f}^{\mu}} + \left\lfloor \frac{m_{s,n_{CI}} \cdot N_{\mathrm{CCE},p}}{L \cdot M_{p,s,\max}^{(L)}} \right\rfloor + n_{CI} \right) \bmod \left\lfloor N_{\mathrm{CCE},p} / L \right\rfloor \right\} + i$$

- L: aggregation level

-

$$n_{CI}$$

: carrier index

-

$$N_{\mathrm{CCE},p}$$

: The number of total CCEs present in the control resource set p

-

$$n_{s,f}^{\mu}$$

: slot index

-

$$M^{(L)}_{p,s,max}$$

: The number of PDCCH candidates of aggregation level L

- $m_{s,nCI} = 0,..., M^{(L)}_{p,s,max} - 1$ : index of PDCCH candidates of aggregation level L
- i=0,...,L-1
-

$$Y_{p,n^{\mu}_{s,f}} = \left( A_p \cdot Y_{p,n^{\mu}_{s,f}-1} \right) mod D$$

,

$$Y_{p,-1} = n_{RNTI} \neq 0$$

,

$$A_p = 39827 \text{ for } p mod 3 = 0$$

,

$$A_p = 39829 \text{ for } p mod 3 = 1$$

,

$$A_p = 39839 \text{ for } p mod 3 = 2$$

, and D=65537.

-

$$n_{RNTI}$$

: UE identity

$$Y_{p,n^{\mu}_{s,f}}$$

value may correspond to 0 in the case of CSS.

$$Y_{p,n^{\mu}_{s,f}}$$

value may correspond to a value changed according to a UE ID (a C-RNTI or an ID configured for the UE by the base station) and a time index in the case of USS.

As a measure to support ultra-high-speed data services, the data rate can be increased through a spatial multiplexing method using multiple transmission and reception antennas. In general, the number of power amplifiers (PAs) required increases in proportion to the number of transmission antennas equipped in the base station or UE. The maximum output of the base station and UE is determined by the characteristics of the power amplifier, and the maximum output of the base station generally varies depending on the cell size covered by the base station. The maximum output can usually be expressed in dBm units. For example, the maximum output of the UE is usually 23 dBm or 26 dBm.

As an example of a commercial 5G base station, the base station is equipped with 64 transmission antennas and corresponding 64 power amplifiers in the 3.5 GHz frequency band and can operate in a bandwidth of 100 MHz. As a result, the amount of energy consumption of the base station increases in proportion to the output of the power amplifier and the operating time of the power amplifier. Compared to LTE base stations, 5G base stations have relatively high operating frequency bands, so they have the characteristics of wide bandwidth and multiple transmission antennas. These characteristics have the effect of increasing the data rate, but at the cost of increased the amount of energy consumption by the base station. Therefore, the more the base stations there are in the mobile communication network, the greater the energy consumption of the entire mobile communication network.

As described above, the energy consumption of the base station can be greatly affected by the operation of the power amplifier. Since the power amplifier is involved in the base station transmission operation, the downlink (DL) transmission operation of the base station is highly related to the energy consumption of the base station. Relatively, the uplink (UL) reception operation of the base station may not account for a large proportion of the energy consumption of the base station. The physical channels and physical signals transmitted by the base station in the DL are as follows.

- Physical Downlink Shared Channel (PDSCH): DL data channel including data to be transmitted to one or a plurality of UEs
- Physical Downlink Control Channel (PDCCH): DL control channel including scheduling information for PDSCH and Physical Uplink Control Channel (PUSCH). Alternatively, control information such as slot format and power control command can be transmitted only with PDCCH without PDSCH or PUSCH to be scheduled. Scheduling information includes resource information to which PDSCH or PUSCH is mapped, HARQ-related information, power control information, etc.
- Physical Broadcast Channel (PBCH): DL broadcast channel providing Master Information Block (MIB), which is essential system information required for transmission and reception of data channels and control channels of the UE.
- Primary Synchronization Signal (PSS): This signal serves as a reference for DL time/frequency synchronization and provides some information about cell ID.
- Secondary Synchronization Signal (SSS): This signal serves as a reference for DL time and/or frequency (hereinafter referred to as time/frequency) synchronization and provides some remaining information about the cell ID.
- Demodulation Reference Signal (DM-RS): This is a reference signal for channel estimation of the UE for each of PDSCH, PDCCH, and PBCH
- Channel-state Information Reference Signal (CSI-RS): This is a DL signal that serves as a reference for measuring the DL channel state of the UE.
- Phase-tracking Reference Signal (PT-RS): This is a DL signal for phase tracking

From the perspective of base station energy saving, when the base station stops DL transmission operation, this causes the power amplifier operation to stop, which can increase the energy saving effect of the base station. Additional energy savings are possible by reducing the operation of other base station devices, including the baseband device as well as the power amplifier. Similarly, even if UL reception operation occupies a relatively small portion of the total energy consumption of the base station, if the UL reception operation can be stopped, additional energy saving effects can be achieved.

The DL transmission operation of the base station is basically determined by the amount of DL traffics. For example, if there is no data to be transmitted to the UE through DL, the base station does not need to transmit the PDSCH and the PDCCH for scheduling the PDSCH. Alternatively, if the transmission can be delayed for a while, such as because the data is not sensitive to transmission delay, the base station may not transmit the PDSCH or/and PDCCH. For the convenience of the following explanation, a method for reducing the energy consumption of the base station by not transmitting or appropriately adjusting the PDSCH or/and PDCCH associated with the data traffic may be called 'Method 1-1 for base station energy saving'.

In contrast, physical channels and physical signals such as PSS, SSS, PBCH, and CSI-RS have the characteristic of being repeatedly transmitted at a predetermined promised cycle regardless of data transmission to the UE. Therefore, even if the UE does not receive data, it can continuously update DL time/frequency synchronization, DL channel status, radio link quality, etc. In other words, PSS, SSS, PBCH, and CSI-RS are necessarily transmitted in the DL regardless of DL data traffic, and thus cause base station energy consumption. Therefore, base station energy saving can be achieved by adjusting the transmission of signals unrelated to (or with low relevance to) data traffic to occur less frequently (hereinafter, called 'Method 1-2 for base station energy saving').

By using 'Method 1-1 for base station energy saving' or 'Method 1-2 for base station energy saving', the energy saving effect of the base station can be maximized by stopping or minimizing the operation of the power amplifier of the base station and the operation of related RF devices, baseband devices, etc. during the time period when the base station does not perform DL transmission.

Alternatively, the energy consumption of the base station can be reduced by switching off some of the antennas or power amplifiers of the base station (hereinafter called 'Method 2 for base station energy saving'). In this case, as a countermeasure to the energy saving effect of the base station, adverse effects such as a decrease in cell coverage or a decrease in throughput may occur. For example, there may be a base station equipped with 64 transmission antennas and corresponding 64 power amplifiers in the 3.5 GHz frequency band as described above and operating in a bandwidth of 100 MHz. In order to save energy for such a base station, in a case where only four transmission antennas and four power amplifiers are activated for a certain time period and the rest of the antennas and power amplifiers are switched off, the base station energy consumption during that time period is reduced to about 1/16 (=4/64). In a case where only four transmission antennas and four power amplifiers are activated for a certain time period and the rest of the antennas and power amplifiers are switched off, it becomes difficult to achieve cell coverage and throughput assuming the existing 64 antennas and power amplifiers due to the decrease in maximum transmission power and beamforming gain.

In the following description, in order to distinguish from a normal base station operation, a base station mode that applies the operation for base station energy saving is called a base station energy saving mode (ES mode), and the base station mode that applies normal base station operation is called a base station normal mode (Normal mode). However, the use of these terms does not limit the technical scope of the disclosure.

As another scheme to support ultra-high-speed data services, the 5G system can support ultra-wide bandwidth signal transmission and reception of tens to hundreds of MHz or several GHz. Ultra-wide bandwidth signal transmission and reception can be supported through a single component carrier (CC) or through carrier aggregation (CA) technology that combines multiple component carriers. In a case where a mobile communication operator cannot secure a frequency with a sufficient bandwidth to provide ultra-high-speed data services with a single component carrier, the carrier aggregation technology can combine respective component carriers with a relatively small bandwidth size to increase a total frequency bandwidth, thereby enabling ultra-high-speed data services.

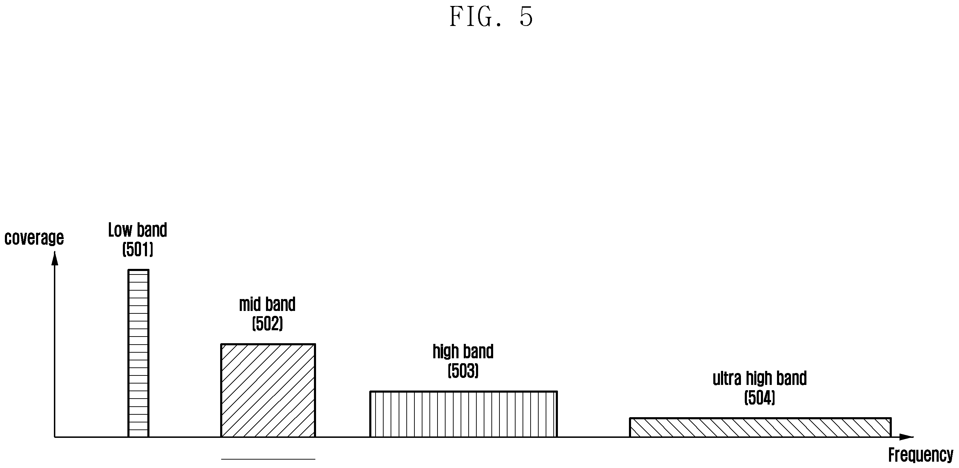

FIG. 5 illustrates the interrelationship between frequency bands, coverage, and bandwidth according to an embodiment of the disclosure.

As described above, the frequency bands utilized by the 5G system are wide ranging from hundreds of MHz to tens of GHz. With reference to FIG. 5, the coverage and frequency bandwidth may vary depending on each of a low-frequency band 501, a medium-frequency band 502, a high-frequency band 503, and an ultra-high frequency band 504. The lower the frequency band, the greater the coverage due to relatively small path loss, and the higher the frequency band, the smaller the coverage due to relatively high path loss. In the low-frequency band, the frequency that can be utilized for mobile communication is relatively small and the bandwidth is small, whereas in the high-frequency band, it is relatively easy to secure a wide bandwidth frequency, making it suitable for ultra-high-speed data services.

As the mobile communication system evolves, efforts are being made to discover and utilize new frequency bands. For example, although it is still in the early discussion stage, the 6th generation (6G) mobile communication system, which is the next-generation mobile communication system, is considering the terahertz (THz, $10^{12}$ Hz) band as one of the candidate frequencies. In general, mobile communication operators secure multiple frequency bands to provide mobile communication services to users. For example, a mobile communication operator can combine the existing secured frequency bands for the LTE system and the newly secured frequency bands for the 5G system to operate a system that combines LTE and 5G. As another example, a mobile communication operator can secure frequency bands for the 5G system across multiple bands and then provide mobile communication services through 5G CA by combining the frequencies of the multiple bands. As described above, since characteristics such as coverage and bandwidth vary depending on the frequency band, mobile communication services that combine multiple frequency bands are becoming increasingly active rather than mobile communication services that depend on a single frequency band.

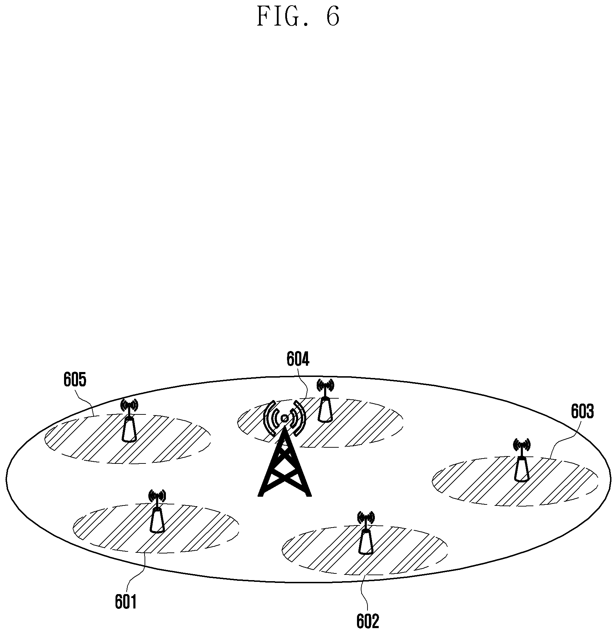

FIG. 6 illustrates an example of a base station deployment scenario according to an embodiment of the disclosure.

With reference to FIG. 6, a carrier may be constituted with a carrier operating at a frequency F1 (hereinafter referred to as a 'macro cell' for convenience of explanation, 601) and a carrier operating at a frequency F1 or F2 (hereinafter referred to as a 'small cell', 602, 603, 604, 605, 606) (e.g., F1 < F2). It is assumed that a 'macro cell' has a relatively high maximum output to provide wide cell coverage, while a 'small cell' has a relatively low maximum output to provide limited cell coverage. The size of the circles illustrated in FIG. 6 may represent the coverage size that each carrier can provide. A plurality of 'small cells' may coexist within the coverage of a 'macro cell'. The 'macro cell' and the 'small cell' may be connected to each other wiredly or wirelessly to enable smooth cooperation. In the disclosure, the base station may be a combination of the 'macro cell' and the 'small cell', or may be implemented as separate base stations for the 'macro cell' and the 'small cell', respectively. In a case where the 'macro cell' and 'small cell' are implemented as one base station, the 'macro cell' and 'small cell' may each be called a transmission reception point (TRP).

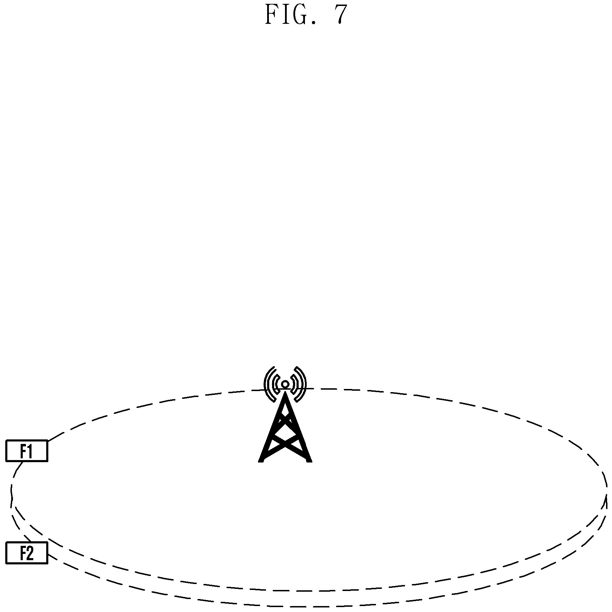

FIG. 7 illustrates another example of a base station deployment scenario according to an embodiment of the disclosure.

With reference to FIG. 7, a carrier bundle system is illustrated in which a carrier (cell 1) operating at a frequency F1 and a carrier (cell 2) operating at a frequency F2 are combined (e.g., F1≠F2). FIG. 7 illustrates an example of applying carrier bundles through one base station. Unlike the case in FIG. 6, it illustrates a case in which cell coverages provided by respective carriers are similar to each other.

In the disclosure, in order to reduce energy consumption of a base station, the transmission power of the signal transmitted by the base station can be adjusted. That is, when the base station transmission power in the base station normal mode is $P_{normal}$, and the base station transmission power in the base station power saving mode is $P_{energysaving}$, the transmission power of the base station transmission signal can be adjusted to satisfy the relationship of $P_{normal} > P_{energysaving}$. The above-described 'Method 2 for base station energy saving' can be viewed as a special case where $P_{energysaving}$ = 0. For example, the units of $P_{normal}$ and $P_{energysaving}$ can be expressed in Watt. This reduction in transmission power can be achieved through the 'Method 1-1 for base station energy saving', 'Method 1-2 for base station energy saving', and 'Method 2 for base station energy saving' described above. However, it should be noted that the disclosure is not limited to the base station energy saving methods presented above.

In the case of the scenario in FIG. 6 or FIG. 7, the base station can reduce base station energy consumption by adjusting the transmission power of the base station transmission signal in at least one cell among the plurality of cells constituting the system. For example, in the case of FIG. 6, the base station can maintain cell coverage through the 'macro cell' and reduce base station energy consumption of the 'small cell' by adjusting the transmission power of at least one 'small cell' and maintaining the transmission power of the 'macro cell' as it is. In the case of FIG. 7, the base station can maintain cell coverage and reduce base station energy consumption by adjusting the transmission power of cell 2 and maintaining the transmission power of cell 1 as it is.

The transmission power can be expressed as power spectral density (PSD) linked to the bandwidth. For example, the unit of PSD can be usually expressed as Watt/Hz and can mean power per unit bandwidth. The transmission bandwidth means the bandwidth occupied by the signal transmitted by the base station and can be expressed in units of MHz. Energy Per Resource Element (EPRE) can be used as a concept similar to PSD. EPRE means energy per RE. For example, EPRE can be expressed in units of dBm.

The disclosure proposes a method for configuring parameters for receiving channel state information (CSI) report from the UE and indicating this to the UE when entering a mode for reducing energy consumption of a base station. Specifically, the base station can allocate transmission resources for signals for CSI measurement of the UE, for example, such as CSI-RS, and transmit them to the UE in a periodic and aperiodic manner. The signal for CSI measurement can use not only CSI-RS but also SSB. For example, if the transmission power is lowered as a base station energy saving method, but many CSI-RS resources are allocated and transmissions for the CSI-RS resources occur frequently, this will cause energy consumption at the base station, thereby reducing the energy saving effect by half. As another example, when a part of the power amplifier (PA) for the base station antenna is turned off as a base station energy saving method, the number of CSI-RS ports for channel measurement needs to be adjusted and indicated accordingly. Above all, although the power consumption of the base station can be reduced by applying a base station energy saving method, cell throughput and coverage can be reduced. To overcome this, it is important for the base station to receive CSI reports from the UE, and based on the CSI reports, it may decide whether to enter a mode for saving base station energy or to use more power for cell throughput and coverage. However, these base station transmission methods should be able to be adjusted at short intervals such as Transmission Time Interval (TTI) and symbol level so that the transmission method suitable for the base station situation can be quickly applied. In this way, a balance can be achieved between base station energy saving and improvements of cell throughput and coverage.

In the disclosure, a method is proposed in which the base station configures CSI-related parameters and indicates the parameters to the UE so that the UE can measure CSI and report the CSI measurement to the base station appropriately in a case where the base station adjusts transmission parameters to reduce the energy consumption.

In order for the base station to receive CSI reports from the UE, CSI resource configuration and CSI report configuration must be performed. CSI resource configuration can be composed of resource set configuration and resource configuration included in the resource set. Reference signals for CSI measurement can be transmitted through CSI resource configurations. In addition, the UE can report measured CSI to base stations through CSI report configurations.

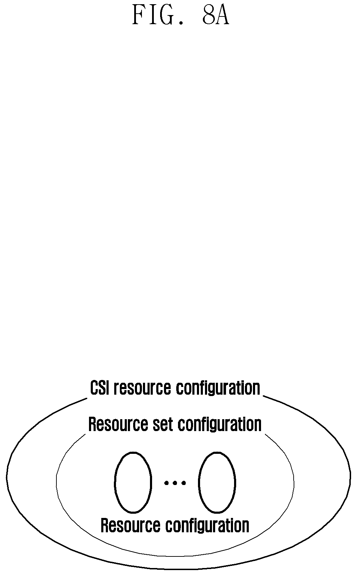

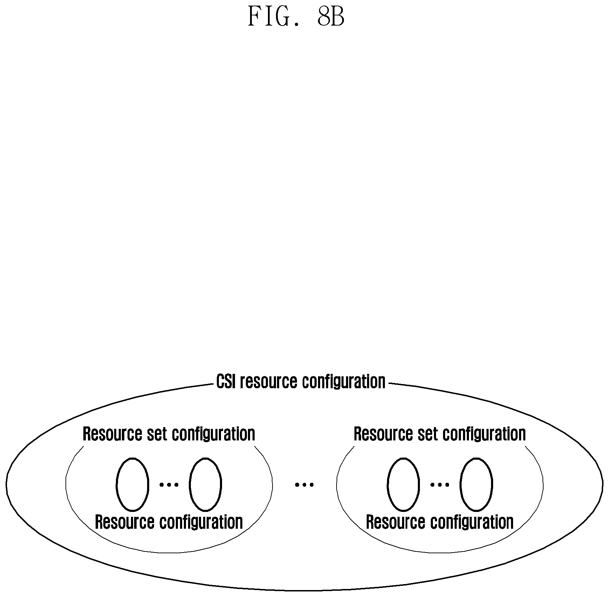

FIG. 8A and FIG. 8B are diagrams for explaining a CSI resource configuration method according to an embodiment of the disclosure.

With reference to FIG. 8A and FIG. 8B, a CSI resource configuration may be composed of a resource set configuration and a resource configuration included in a resource set. A maximum of X CSI resource configurations (e.g., X=112) may be configured. The number of resource configurations included per resource set can be configured to a maximum of Y (e.g., Y=64).

With reference to FIG. 8A, one CSI resource configuration may include one resource set configuration. This constitution may be limited to only configurations corresponding to periodic CSI and semi-persistent CSI. In contrast, with reference to FIG. 8B, a plurality of resource set configurations may be included in one CSI resource configuration. This constitution may be limited to only configurations corresponding to aperiodic CSI. Further, in a case like FIG. 8B, the number of resource set configurations that can be included per CSI resource configuration can be configured to a maximum of S (e.g., S=16).

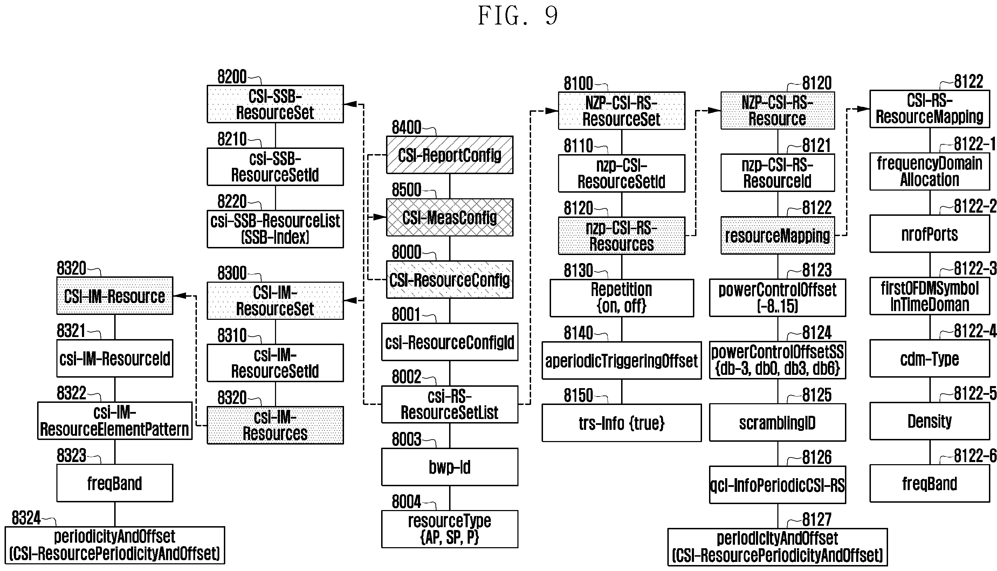

FIG. 9 illustrates related parameters included in CSI resource configuration according to an embodiment of the disclosure.

With reference to FIG. 9, CSI-related parameters may include CSI report configuration (CSI-ReportConfig, 8400), CSI measurement configuration (CSI-MeasConfig, 8500), and CSI resource configuration (CSI-ResourceConfig, 8000). CSI resource configuration may be performed via CSI-ResourceConfig 8000. A reference signal for CSI measurement may be transmitted via CSI resource configuration. The type of CSI resource may be determined via CSI resource configuration. In other words, csi-RS-ResourceSetList 8002, which is a resource set configuration that determines the type of CSI resource via CSI resource configuration, may be indicated. Specifically, the resource set configuration 8002 may include NZP-CSI-RS-ResourceSet 8100 for channel and interference measurement, CSI-IM-ResourceSet 8300 for interference measurement, and CSI-SSB-ResourceSet 8200 for channel measurement. Here, NZP-CSI-RS-ResourceSet 8100 or CSI-IM-ResourceSet 8300 may be performed through CSI-RS transmission, which is a reference signal, and CSI-SSB-ResourceSet 8200 may be performed through Synchronization Signal Block (SSB). CSI-ResourceConfig 8000, which is a CSI resource configuration, may include csi-ResourceConfigId 8001, which is a corresponding ID, bwp-Id 8003, which is an ID of a Bandwidth Part (BWP) through which CSI resources are transmitted, and resourceType 8004 which indicates whether the transmission of the CSI is aperiodic (AP), semi-persistent (SP), or periodic (P) (i.e., time domain behavior of resource configuration). CSI-SSB-ResourceSet 8200 may include CSI-SSB-ResourceSetID 8210 and CSI-SSB-Resourcelist 8220. CSI-IM-ResourceSet 8300 may include CSI-IM-ResourceSetID 8310 and CSI-IM-Resources 8320. CSI-IM-Resources 8320 may include CSI-IM-ResourceID 8321, CSI-IM-ResourceElementPattern 8322, freqband 8323, and periodicityAndOffset 8324.

The NZP-CSI-RS-ResourceSet 8100 among the resource set configurations in FIG. 9 is described in more detail. NZP-CSI-RS-ResourceSet 8100 may include nzp-CSI-ResourceSetId 8110, which is a corresponding ID, nzp-CSI-RS-Resources 8120 for resource configuration, Repetition 8130 for indicating whether to repeat transmission of resources, aperiodicTriggeringOffset 8140 for indicating the time position of the aperiodic CSI resource set, trs-Info 8150, which is Tracking reference Signal (TRS)-related configuration, and the like.

In addition, specific information about how CSI-RS is transmitted can be configured via 8121 to 8127 through nzp-CSI-RS-Resources 8120, which is resource configuration. nzp-CSI-RS-Resources 8120 may include nzp-CSI-RS-ResourceID 8121, resourceMapping 8122, powerControlOffset 8123, powerControlOffsetSS 8124, scramblingID 8125, qcl-InfoPeriodicCSI-RS 8126, periodicityAndOffset 8127. In particular, the configuration of the number of CSI-RS ports 8122-2 and related parameters can refer to resourceMapping 8122 in the NZP-CSI-RS-Resource 8120 configuration. Specifically, frequencyDomainAllocation 8122-1 is a parameter that indicates a frequency RE location within an RB where a CSI-RS is transmitted. firstOFDMSymbolInTimeDomain 8122-3 is a parameter that indicates a symbol location within an RB where a CSI-RS is transmitted. cdm-Type 8122-4 is a parameter that indicates which code is applied to the CSI-RS among {e.g., noCDM, fd-CDM2, cdm4-FD2-TD2, cdm8-FD2-TD4}. Density 8122-5 is a parameter that indicates the density of the CSI-RS measured in RE/port/PRB, and may be configured to one of the values of {0.5, 1, 3}, for example. freqBand 8122-6 is a parameter that indicates the frequency domain in which the CSI-RS is transmitted.

Specifically, Methods 1 to 5 proposes methods for the base station to configure CSI-related parameters in order to reduce energy consumption. Method 6 proposes a method for the base station to indicate the number of CSI-RS ports and related parameters to the UE in order to reduce energy consumption. Method 7 proposes a method for the base station to indicate to the UE a frequency domain in which CSI-RS is transmitted in order to reduce energy consumption. Method 8 proposes a method for the base station to indicate to the UE that a periodicity and offset value of CSI-RS is transmitted in order to reduce energy consumption. Method 9 proposes a method for measuring and reporting CSI in an operation process in which the base station reduces energy consumption.

The method proposed in the disclosure can be applied to a case of adjusting transmission parameters at short intervals in time for power saving of the base station and cell throughput and coverage managements.

One or more of the methods and/or embodiments proposed in the disclosure can be used in combination with each other.

< Method 1 >

A method 1 for configuring CSI-related resources and parameters for reducing energy consumption of a base station according to an embodiment of the disclosure will be described.

The base station can activate/deactivate CSI-related parameters configured with RRC through MAC-CE and/or DCI. CSI-related parameters configured with RRC may correspond to parameters described through FIG. 9. In addition, Method 1 may be limited to parameter configurations corresponding to periodic or semi-persistent CSI.

Legacy UEs (UEs that cannot interpret newly introduced signaling) may not be able to receive CSI-related parameters changed according to Method 1. Therefore, a method for supporting legacy UEs through frequency distinction may be considered. For example, in Bandwidth Part (BWP) A, CSI-related parameters configured with RRC as before are applied to support legacy UEs, and in BWP B, CSI-related parameters configured with RRC may be activated/deactivated for new UEs (UEs that can interpret newly introduced signaling) through MAC-CE and/or DCI. According to Method 1 above, the base station can indicate to the UE the CSI resources and report configurations to reduce energy consumption of the base station, and the UE can report CSI to the base station accordingly.

Specifically, the base station can configure up to X (for example, X=112) CSI resource configurations of the UE within the base station coverage through RRC. However, as the number of CSI resource configurations of the base station approaches X, the amount of CSI resources increases and if transmissions for these occur frequently, energy consumption of the base station will be induced.

Therefore, in a case where the base station is in an energy saving mode, the amount of CSI resources transmitted by the base station can be reduced by deactivating the CSI resources configured through RRC. In contrast, in a case where the base station is not in the energy saving mode, the deactivated CSI resources can be reactivated to increase the amount of CSI resources and better receive CSI reports from the UE. More specifically, the following alternatives can be considered as a method for activating/deactivating the CSI resource configuration configured through RRC. It should be noted that the disclosure is not limited to the following alternatives. Further, in a case where one or more of the following alternatives are considered, which alternative is used may be configured through RRC.

* Alternative 1: MAC-CE activation/deactivation

** In the case of Alternative 1, in a case where there are X resource configurations, which resource among them has been activated/deactivated can be indicated by MAC CE through a bitmap of X bits. However, it is noted that the signaling method in the disclosure is not limited to the bitmap.

**[0129]** * Alternative 2: MAC-CE + DCI activation/deactivation

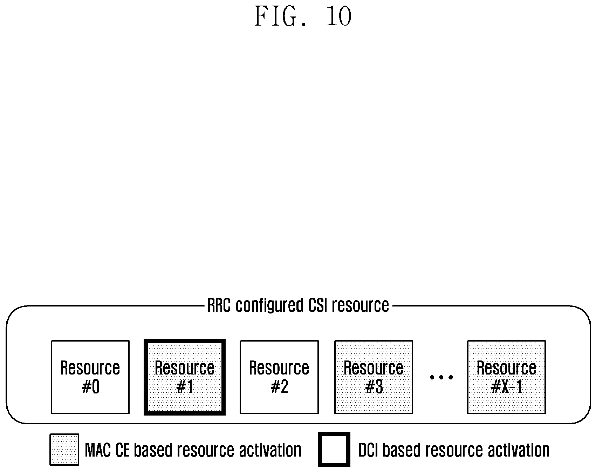

** In the case of Alternative 2, in a case where there are X resource configurations, which resource among them has been activated/deactivated can be indicated by MAC CE through a bitmap of X bits. Then, for Y ($\leq$ X) resource configurations activated by MAC-CE, the resource activated by DCI can be indicated using a bitmap of Y bits or $\lceil \log_2 Y \rceil$ bit. It is noted that the signaling method in the disclosure is not limited to the method presented above. An example of this is illustrated in FIG. 10.

FIG. 10 illustrates an example of activating/deactivating CSI resources via MAC CE and DCI according to an embodiment of the disclosure.

With reference to FIG. 10, X CSI resources, which is CSI resource #0 to CSI resource #(X-1), can be configured through RRC. Among them, CSI resource #1, CSI resource #3, and CSI resource #(X-1) can be activated through MAC-CE. Further, activation of CSI resource #1 can be indicated through DCI.

In the case of indicating Y resources activated by MAC-CE using a bitmap through DCI, one or more activated resources can be indicated, but in the case of indicating using $\lceil \log_2 Y \rceil$ bits through DCI, only one activated resource can be indicated.

* Alternative 3: DCI activation/deactivation

** In the case of Alternative 3, in a case where there are X resource configurations, the resources activated through DCI can be indicated using a bitmap of X bits or $\lceil \log_2 X \rceil$ bits to indicate which of these resources has been activated/deactivated. It is noted that the disclosure is not limited to the method presented above as a signaling method.

In the case where the CSI resource configuration is activated/deactivated through MAC-CE or DCI in relation to the energy saving operation of the base station in the above, the resource set configuration in the CSI resource configuration or the resource configuration included in the resource set configuration may all be activated/deactivated together.

In the embodiment according to Method 1 above, a method for activating/deactivating the CSI resource configuration configured by RRC through MAC-CE or DCI is proposed, but the disclosure is not limited thereto. For example, the resource set configuration configured through RRC or the resource configuration included in the resource set, and the CSI report configuration or the like may be activated/deactivated through MAC-CE or DCI in relation to the energy saving operation of the base station. For example, in a case where TRS is configured to be transmitted as {true} in the resource set configuration of the CSI resource configuration, TRS can be turned on/off for transmission by activating/deactivating through MAC-CE or DCI. In a case where the corresponding function is activated/deactivated through DCI, 1-bit information through which TRS is turned on/off for transmission can be included in the DCI, and in a case where TRS is configured to be transmitted as {false} in RRC, the corresponding bit in the DCI can be configured to zero bit.

< Method 2 >

A method 2 for configuring CSI-related resources and parameters for reducing energy consumption of a base station according to an embodiment of the disclosure will be described.

Depending on whether the base station is in an energy saving mode or not, CSI-related configurations can be distinguished in RRC. CSI-related parameters configured through RRC can correspond to the parameters described with respect to FIG. 9. In addition, Method 2 can be limited to parameter configurations corresponding to periodic or semi-persistent CSI.

Legacy UEs may not be able to receive CSI-related configurations configured in RRC in a case where the base station is in the energy saving mode according to Method 2. Therefore, a method for supporting legacy UEs through frequency distinction, for example, may be considered. For example, in BWP A, CSI-related configurations configured with RRC as before are applied to support legacy UEs, and in BWP B, CSI-related configurations configured with RRC may be applied to new UEs in a case where the base station is in the energy saving mode. According to Method 2 above, the base station can indicate to the UE CSI resource and report configurations to reduce energy consumption of the base station, and the UE can report CSI to the base station accordingly.

Specifically, the base station can configure up to X (for example, X=112) CSI resource configurations of the UE within the base station coverage through RRC in a case where the base station does not operate in the energy saving mode. As the CSI resource configuration of the base station approaches X, the amount of CSI resources increases, and if transmissions for these resources occur frequently, energy consumption of the base station is bound to occur. Therefore, Method 2 is a method for operating the CSI resource configuration configured through RRC separately for cases where the base station is not in the energy saving mode and where the base station is in the energy saving mode.

More specifically, in a case where the base station is in the energy saving mode, the number of CSI resource configurations configured through RRC can be limited to a maximum of Y (e.g., Y<X, for example, Y=32). In this case, Method 1 described above may be applied, and methods for activating/deactivating CSI resource configurations configured through RRC in a case where the base station is in the energy saving mode may be additionally applied.

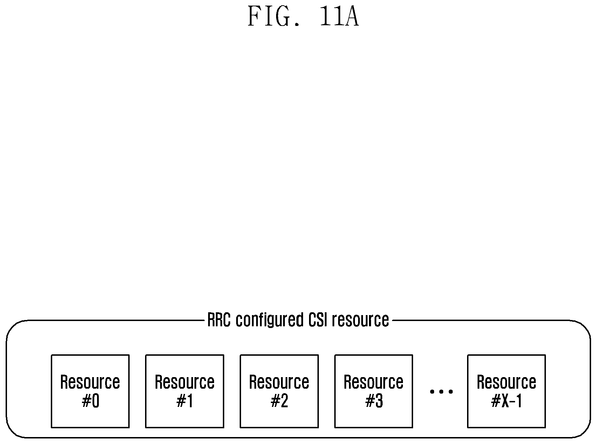

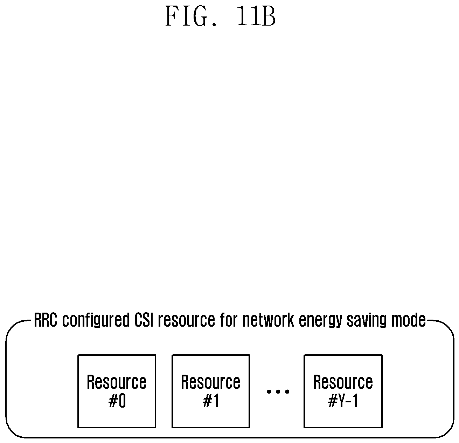

FIG. 11A and FIG. 11B illustrate an example of a CSI resource configuration method according to an embodiment of the disclosure.

With reference to FIG. 11A and FIG. 11B, a CSI resource configuration method according to Method 2 above will be described. With reference to FIG. 11A, in a case where the base station does not operate in an energy saving mode, the number of CSI resource configurations may be configured to a maximum of X and operated. In contrast, with reference to FIG. 11B, in a case where the base station operates in the energy saving mode, the number of CSI resource configurations may be configured to a maximum of Y (e.g., Y<X) and operated.

In addition to the CSI resource configuration described above, in a case where the base station is not in the energy saving mode and in a case where the base station is in the energy saving mode, the resource set configuration within the CSI resource configuration configured through RRC or the resource configuration included in the resource set may be configured separately. In addition, the CSI report configuration configured through RRC may also be distinguished.

< Method 3 >

A method 3 for configuring CSI-related resources and parameters for reducing energy consumption of a base station according to an embodiment of the disclosure will be described.

Some of the CSI-related parameters configured through RRC may be configured differently depending on whether the base station is in the energy saving mode or not. The CSI-related parameters configured through RRC may correspond to the parameters described with respect to FIG. 9. In addition, Method 3 may be limited to only parameter configurations corresponding to periodic or semi-persistent CSI.

The above-described Method 2 is a method in which CSI resource configuration, resource set configuration, resource configuration, and CSI report configuration configured through RRC, etc. are configured separately depending on whether the base station is in the energy saving mode or not. However, Method 3 is a method in which only some parameters within CSI resource configuration, resource set configuration, resource configuration, and CSI report configuration configured through RRC, etc. are configured differently depending on whether the base station is in the energy saving mode or not. In a case where the base station is in the energy saving mode, specific parameter values in the CSI resource configuration and the CSI report configuration may be configured in consideration of the base station energy saving mode. In addition, in the case of the energy saving mode, specific parameters in the CSI resource configuration and the CSI report configuration may not be used, or new parameters may be added. For example, in the resource set configuration in the CSI resource configuration, TRS may be configured to {false}, so that the TRS may not be transmitted. As another example, in the resource configuration included in the resource set, the CSI-RS periodicity/offset, the number of CSI-RS ports, the frequency domain in which the CSI-RS is transmitted, etc. may be configured to different values considering the energy saving mode, unlike in the case where it is not in the energy saving mode. According to Method 3 above, the base station may indicate to the UE the CSI resource and report configurations for reducing base station energy consumption, and the UE may report CSI to the base station accordingly.

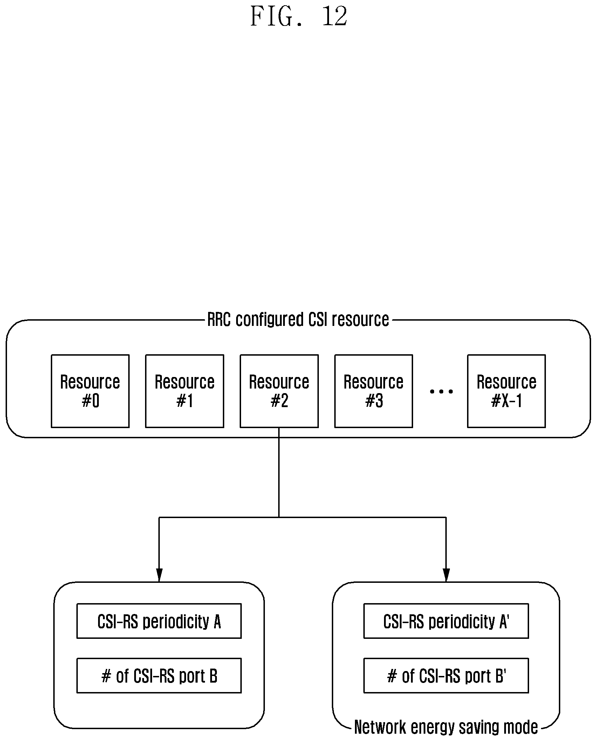

FIG. 12 illustrates another example of a method for configuring CSI resources according to an embodiment of the disclosure.

With reference to FIG. 12, a method for configuring CSI resources according to Method 3 above is described. With reference to FIG. 12, an example is illustrated in which parameters for CSI-RS periodicity and the number of CSI-RS ports are configured in each resource (Resource #X) (X is a resource ID, e.g., X=0,1,2,...). The same periodicityAndOffset(CSI-ResourcePeriodicityAndOffset) 8127 and nrofPorts 8122-2 related parameters in the NZP-CSI-RS-Resource 8120 configuration in FIG. 9 can be referred to. According to Method 3, the values for the corresponding parameters can be configured to two different values depending on whether the base station is in the energy saving mode or not. Specifically, the CSI-RS periodicity may be configured to A in a case where the base station is not in the energy saving mode, or to A' in a case where the base station is in the energy saving mode (e.g., A< A'). As another example, the number of CSI-RS ports may be configured to B in a case where the base station is not in the energy saving mode, or to B' in a case where the base station is in the energy saving mode (e.g., B>B').

In Method 3, in a case where some of the CSI-related parameters configured through RRC are configured differently depending on whether the base station is in the energy saving mode or not, which parameter is applied to the UE may be determined depending on whether the base station is configured to the energy saving mode. The base station may explicitly indicate to the UE whether the base station is in the energy saving mode through configurations, or may be indicated through implicit manner. The method by which the base station indicates to the UE whether the base station is in the energy saving mode is not limited to a specific method in the disclosure.

Legacy UEs may not be able to interpret some of the CSI-related parameters configured in RRC in a case where the base station is in the energy saving mode according to Method 3. Therefore, a method for supporting legacy UEs through frequency distinction can be considered, for example. For example, in BWP A, existing CSI-related parameters configured through RRC are applied to a case where it is not in the energy saving mode to support legacy UEs, and in BWP B, CSI-related parameters configured through RRC can be applied to new UEs considering that the base station is in the energy saving mode.

< Method 4 >

A method for configuring CSI-related resources and parameters for reducing energy consumption of a base station according to an embodiment of the disclosure will be described.

Method 4-1 is a method in which, among the CSI-related configurations configured through RRC, only the configurations corresponding to aperiodic CSI are activated in a case where the base station is in the energy saving mode, and all configurations corresponding to periodic or semi-persistent CSI are deactivated.

Method 4-2 is a method in which, among the CSI-related parameters configured through RRC, only the configurations corresponding to aperiodic CSI and semi-persistent CSI are activated in a case where the base station is in the energy saving mode, and all configurations corresponding to periodic CSI are deactivated.

Since the configurations corresponding to periodic CSI are deactivated according to Method 4-1 or Method 4-2 above, at least periodic CSI-RS transmission or periodic CSI reporting is deactivated, reducing the amount of CSI resources and preventing frequent occurrence of corresponding transmissions, thereby achieving the effect of base station energy saving. The UE may interpret that according to Method 4-1, among the CSI-related configurations configured through RRC, all configurations corresponding to periodic or semi-persistent CSI are deactivated in a case where the base station is operating in the energy saving mode. Alternatively, the UE may interpret that according to Method 4-2, among the CSI-related configurations configured through RRC, all configurations corresponding to periodic CSI are deactivated in a case where the base station is operating in the energy saving mode. According to Method 4-1 or Method 4-2 above, the base station may indicate to the UE CSI resource and report configurations for reducing energy consumption by the base station, and the UE may report CSI to the base station accordingly.

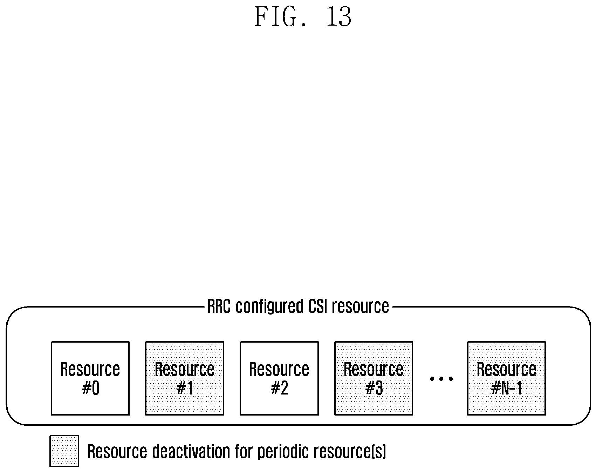

FIG. 13 illustrates another example of a method for configuring CSI resources according to an embodiment of the disclosure.

With reference to FIG. 13, a method for configuring CSI resources performed according to Method 4-1 or Method 4-2 above is described. With reference to FIG. 13, an example is illustrated in which some of the resources are configured as Periodic resources and the corresponding resources are deactivated according to Method 4-1 or Method 4-2. In FIG. 9, resourceType 8004 in CSI-ResourceConfig 8000 may be referenced, indicating whether the transmission of CSI is aperiodic, semi-persistent, or periodic.

Whether Method 4-1 or Method 4-2 is applied may be determined depending on whether the base station is configured to the energy saving mode. In a case where the base station is configured to the energy saving mode, Method 4-1 or Method 4-2 above may be applied. The base station may explicitly indicate to the UE whether the base station is in the energy saving mode through a configuration, or may be indicated through implicit manner. In the disclosure, a method for the base station to indicate to the UE whether the base station is in the energy saving mode in is not limited to a specific method.

Among the CSI-related configurations configured through RRC according to Method 4-1 above, only the configurations corresponding to aperiodic CSI are activated in a case where the base station is in the energy saving mode, and a method for configuring CSI-related resources and parameters in this case will be described. In the case of aperiodic CSI, as described in FIG. 8B, one CSI resource configuration may include a plurality of resource set configurations. Further, one resource set may be selected through MAC-CE and/or DCI. Accordingly, the base station may configure a plurality of resource sets, and among them, some resource sets may configure CSI-related resources and parameters considering the case where the base station is in the energy saving mode, and other resource sets may configure CSI-related resources and parameters considering the case where the base station is not in the energy saving mode. Further, in a case where the base station operates in the energy saving mode, the corresponding resource set may be selected and indicated through MAC-CE and/or DCI, and in a case where the base station does not operate in the energy saving mode, the corresponding resource set may be selected and indicated through MAC-CE and/or DCI.

According to Method 4-2 above, among the CSI-related configurations configured through RRC, only the configurations corresponding to aperiodic CSI and semi-persistent CSI are activated in a case where the base station is in the energy saving mode, and a method for configuring CSI-related resources and parameters will be described. In the case of the configurations corresponding to aperiodic CSI, the resource and parameter configuration according to Method 4-1 above can be possible. In contrast, in the case of the configurations corresponding to semi-persistent CSI, only one resource set configuration can be included in one CSI resource configuration, as described in FIG. 8A. Accordingly, among the CSI related configurations configured through RRC according to Method 4-2, in a case where the configurations corresponding to the semi-persistent CSI is also activated in a case where the base station is in the energy saving mode, a method for allowing a plurality of resource set configurations for one CSI resource configuration as in FIG. 8B can be applied to adjust the transmission parameters at short intervals in time. Accordingly, according to Method 4-2, a plurality of resource set configurations can be included in one CSI resource configuration for the configurations corresponding to aperiodic CSI and semi-persistent CSI in a case where the base station is in the energy saving mode. In a case where a plurality of resource sets are configured, one resource set can be selected through MAC-CE and/or DCI. Accordingly, the base station can configure a plurality of resource sets, and among them, some of the resource sets can configure CSI-related resources and parameters considering the case where the base station is in the energy saving mode, and other some of the resource sets can configure CSI-related resources and parameters considering the case where the base station is not in the energy saving mode. Further, in a case where the base station operates in the energy saving mode, the corresponding resource set can be selected and indicated through MAC-CE and/or DCI, and in a case where the base station does not operate in the energy saving mode, the corresponding resource set can be selected and indicated through MAC-CE and/or DCI.

The above method can be determined depending on whether the base station is configured to the energy saving mode. Whether the base station is in the energy saving mode can be explicitly indicated to the UE through the configurations, or can be indicated in an implicit manner. In the disclosure, a method for the base station to indicate to the UE whether the base station is in the energy saving mode is not limited to a specific method.

< Method 5 >

A method 5 for configuring CSI-related resources and parameters for reducing energy consumption of a base station according to an embodiment of the disclosure will be described.

According to Method 5, in order to adjust CSI transmission parameters for aperiodic CSI, semi-persistent CSI, and periodic CSI at short intervals in time in a case where the base station is in the energy saving mode, as illustrated in FIG. 8B, a plurality of resource set configurations can be allowed for one CSI resource configuration, among CSI-related configurations configured through RRC. In a case where a plurality of resource sets are configured, one resource set can be selected through MAC-CE and/or DCI. Accordingly, the base station can configure a plurality of resource sets, and configure CSI-related resources and parameters for some of the resource sets considering the case where the base station is in the energy saving mode, and configure CSI-related resources and parameters for other resource sets considering the case where the base station is not in the energy saving mode. In addition, in a case where the base station operates in the energy saving mode, the corresponding resource set can be selected and indicated through MAC-CE and/or DCI, and in a case where the base station does not operate in the energy saving mode, the corresponding resource set can be selected and indicated through MAC-CE and/or DCI.

Method 5 can be determined based on whether the base station is configured to the energy saving mode. Whether the base station is in the energy saving mode can be explicitly indicated to the UE through configurations, or can be indicated in an implicit method. In the disclosure, a method for the base station to indicate to the UE whether the base station is in the energy saving mode is not limited to a specific method.

According to Method 5 above, the base station can indicate to the UE CSI resources and reporting configurations for reducing energy consumption of the base station, and the UE can report CSI to the base station accordingly.

< Method 6 >

The base station can indicate the number of CSI-RS ports and related parameters to the UE to reduce energy consumption.

When the base station switches off some of the power amplifiers (PA) for the antennas as a method for base station energy saving, the number of CSI-RS ports for channel measurement needs to be adjusted and indicated to the UE accordingly. For example, a case where 32 power amplifiers for 32 antenna ports are switched on, and only 8 power amplifiers for 8 antenna ports are switched on and the remaining power amplifiers are all switched off to save base station energy is considered. In this case, if the number of CSI-RS ports for 32 antenna ports has been previously configured to 32, the number of CSI-RS ports needs to be adjusted to 8 or less and indicated after only the power amplifiers for 8 antenna ports are switched on.

In this way, when the base station performs an operation to reduce energy consumption, an operation may be required to adjust the configuration of the number of CSI-RS ports and related parameters configured through RRC at short intervals in time through MAC-CE and/or DCI.

With reference to FIG. 9, the number of CSI-RS ports and related parameters can be configured by with reference to resourceMapping 8122 in the NZP-CSI-RS-Resource 8120 configuration. Therefore, in order to adjust the corresponding configuration parameters, it is necessary to indicate the configurations of the number of CSI-RS ports 8122-2 and related parameters 8122-1, 8122-3, 8122-4, 8122-5 for each resource configuration included in resource set in the resource set configuration in all CSI resource configurations. In such cases, not only must nzp-CSI-RS-ResourceId 8121 be indicated, but a lot of signaling overhead may occur in a case where the indication of the number of corresponding CSI-RS ports and related parameter configurations is considered through MAC-CE and/or DCI.

As a way to reduce this signaling overhead, a method for indicating differential value of the number of CSI-RS ports for each CSI resource configuration, each resource set configuration, or each resource configuration can be considered.

For example, $\lceil \log_2 X \rceil$ bits can be used to indicate X differential values. For example, in the case of X=4, 2 bits are used, and with information of {-4, -2, 0, +2}, '-4' can indicate that the number of CSI-RS ports is reduced by 4 times, '-2' can indicate that the number of CSI-RS ports is reduced by 2 times, '0' can indicate that the number of CSI-RS ports has no change, and '2' can indicate that the number of CSI-RS ports is increased by 2 times. In the disclosure, the number of bits used to indicate the differential value and the method for interpreting the indicated bits are not limited thereto.

It is apparent that in a case where the number of ports changes, the configurations of the parameters (8122-1, 8122-3, 8122-4, 8122-5) also need to be modified and indicated according to the number of ports. However, as a way to reduce signaling overhead, a method for assuming the configurations of parameters (8122-1, 8122-3, 8122-4, 8122-5) to specific values may be considered.

For example, frequencyDomainAllocation 8122-1 is a parameter that indicates the frequency RE location within the RB where the CSI-RS is transmitted. In Table 8 below, row 1 can indicate the frequency location as a 4-bit bitmap, row 2 can indicate the frequency location as a 12-bit bitmap, row 4 can indicate the frequency location as a 3-bit bitmap, and the remaining rows can indicate the frequency location as 6-bit bitmaps. Therefore, the following can be considered as a method for maintaining the values configured in RRC without indicating the corresponding value in frequencyDomainAllocation 8122-1.

**[0174]** * CSI-RS port may not be indicated to row 1 or row 4. This is a method for avoiding indication to a row using a different bitmap. In particular, since row 1 is a pattern for high density, it may not be necessary from the perspective of reducing base station energy consumption.

**[0175]** * In a case where CSI-RS port is indicated to row 2 (port 1) in a row other than row 1 or row 4 , the last 6 bits of the 12-bit bitmap of row 2 can be assumed to be 0 or 1.

Next, firstOFDMSymbolInTimeDomain 8122-3 is a parameter that indicates the symbol location in the RB where the CSI-RS is transmitted, and the corresponding value configured through RRC can be assumed not to change.

cdm-Type 8122-4 is a parameter that indicates which code is applied to the CSI-RS among {noCDM, fd-CDM2, cdm4-FD2-TD2, cdm8-FD2-TD4}, and can be assumed as a specific cdm-Type except in cases where the CSI-RS port is not indicated to row 2 (1 port, noCDM). For example, rows 3, 4, 5, 6, 7, 9, 11, 13, and 16 in Table 8 below correspond to cases where fd-CDM2 is assumed.

Density 8122-5 is a parameter that indicates the density of the CSI-RS with one of the values { 0.5, 1, 3}, and the corresponding value can also be fixed to one value. For example, the corresponding value can be fixed to 1.

[Table 8]

| Row | Ports $X$ | Density $\rho$ | cdm-Type | $(\bar{k},\bar{l})$ | CDM group index $j$ | $k'$ | $l'$ |
|---|---|---|---|---|---|---|---|
| 1 | 1 | 3 | noCDM | $(k_0, l_0)$, $(k_0 + 4, l_0)$, $(k_0 + 8, l_0)$ | 0,0,0 | 0 | 0 |
| 2 | 1 | 1, 0.5 | noCDM | $(k_0, l_0)$, | 0 | 0 | 0 |
| 3 | 2 | 1, 0.5 | fd-CDM2 | $(k_0, l_0)$, | 0 | 0, 1 | 0 |
| 4 | 4 | 1 | fd-CDM2 | $(k_0, l_0)$, $(k_0 + 2, l_0)$ | 0,1 | 0, 1 | 0 |
| 5 | 4 | 1 | fd-CDM2 | $(k_0, l_0)$, $(k_0, l_0 + 1)$ | 0,1 | 0, 1 | 0 |
| 6 | 8 | 1 | fd-CDM2 | $(k_0, l_0)$, $(k_1, l_0)$, $(k_2, l_0)$, $(k_3, l_0)$ | 0,1,2,3 | 0, 1 | 0 |
| 7 | 8 | 1 | fd-CDM2 | $(k_0, l_0)$, $(k_1, l_0)$, $(k_0, l_0 + 1)$, $(k_1, l_0 + 1)$ | 0,1,2,3 | 0, 1 | 0 |
| 8 | 8 | 1 | cdm4-FD2-TD2 | $(k_0, l_0)$, $(k_1, l_0)$ | 0,1 | 0, 1 | 0, 1 |
| 9 | 12 | 1 | fd-CDM2 | $(k_0, l_0)$, $(k_1, l_0)$, $(k_2, l_0)$, $(k_3, l_0)$, $(k_4, l_0)$, $(k_5, l_0)$ | 0,1,2,3,4,5 | 0, 1 | 0 |
| 10 | 12 | 1 | cdm4-FD2-TD2 | $(k_0, l_0)$, $(k_1, l_0)$, $(k_2, l_0)$ | 0,1,2 | 0, 1 | 0, 1 |
| 11 | 16 | 1, 0.5 | fd-CDM2 | $(k_0, l_0)$, $(k_1, l_0)$, $(k_2, l_0)$, $(k_3, l_0)$, $(k_0, l_0 + 1)$, $(k_1, l_0 + 1)$, $(k_2, l_0 + 1)$, $(k_3, l_0 + 1)$ | 0,1,2,3, 4,5,6,7 | 0, 1 | 0 |
| 12 | 16 | 1, 0.5 | cdm4-FD2-TD2 | $(k_0, l_0)$, $(k_1, l_0)$, $(k_2, l_0)$, $(k_3, l_0)$ | 0,1,2,3 | 0, 1 | 0, 1 |
| 13 | 24 | 1, 0.5 | fd-CDM2 | $(k_0, l_0)$, $(k_1, l_0)$, $(k_2, l_0)$, $(k_0, l_0 + 1)$, $(k_1, l_0 + 1)$, $(k_2, l_0 + 1)$, $(k_0, l_1)$, $(k_1, l_1)$, $(k_2, l_1)$, $(k_0, l_1 + 1)$, $(k_1, l_1 + 1)$, $(k_2, l_1 + 1)$ | 0,1,2,3,4,5, 6,7,8,9,10,11 | 0, 1 | 0 |
| 14 | 24 | 1, 0.5 | cdm4-FD2-TD2 | $(k_0, l_0)$, $(k_1, l_0)$, $(k_2, l_0)$, $(k_0, l_1)$, $(k_1, l_1)$, $(k_2, l_1)$ | 0,1,2,3,4,5 | 0, 1 | 0, 1 |
| 15 | 24 | 1, 0.5 | cdm8-FD2-TD4 | $(k_0, l_0)$, $(k_1, l_0)$, $(k_2, l_0)$ | 0,1,2 | 0, 1 | 0, 1, 2, 3 |
| 16 | 32 | 1, 0.5 | fd-CDM2 | $(k_0, l_0)$, $(k_1, l_0)$, $(k_2, l_0)$, $(k_3, l_0)$, $(k_0, l_0 + 1)$, $(k_1, l_0 + 1)$, $(k_2, l_0 + 1)$, $(k_3, l_0 + 1)$, $(k_0, l_1)$, $(k_1, l_1)$, $(k_2, l_1)$, $(k_3, l_1)$, $(k_0, l_1 + 1)$, $(k_1, l_1 + 1)$, $(k_2, l_1 + 1)$, $(k_3, l_1 + 1)$ | 0,1,2,3, 4,5,6,7, 8,9,10,11, 12,13,14,15 | 0, 1 | 0 |
| 17 | 32 | 1, 0.5 | cdm4-FD2-TD2 | $(k_0, l_0)$, $(k_1, l_0)$, $(k_2, l_0)$, $(k_3, l_0)$, $(k_0, l_1)$, $(k_1, l_1)$, $(k_2, l_1)$, $(k_3, l_1)$ | 0,1,2,3,4,5,6,7 | 0, 1 | 0, 1 |
| 18 | 32 | 1, 0.5 | cdm8-FD2-TD4 | $(k_0, l_0)$, $(k_1, l_0)$, $(k_2, l_0)$, $(k_3, l_0)$ | 0,1,2,3 | 0,1 | 0,1, 2, 3 |

For example, when some of the power amplifiers (PAs) for the base station antennas are switched 'off, in a case where the number of antenna ports that are still 'on' is smaller than the number of ports configured through RRC, an indication for lowering the number of CSI-RS ports may not be performed. In other words, the number of CSI-RS ports may be adjusted in the above-mentioned method only in a case where the number of antenna ports that are still 'on' is larger than the number of ports configured through RRC.

< Method 7 >

The base station can indicate to the UE the frequency domain in which the CSI-RS is transmitted in order to reduce energy consumption. The system Bandwidth (BW) which operates in a case where the base station performs an energy consumption reduction operation can also be changed. For example, when a part of the power amplifier (PA) for the base station antenna is switched 'off as a method for base station energy saving, the coverage can be reduced accordingly. To overcome this, a method for improving coverage by reducing the system BW can be considered. In a case where the base station changes the system BW in this way, the corresponding information can be indicated to the UE. In addition, the configuration of the parameter related to the frequency domain in which the CSI-RS is transmitted can also be configured in consideration of the changed system BW.

With reference to FIG. 9, the configuration of the parameter related to the frequency domain in which the CSI-RS is transmitted can refer to resourceMapping 8122 in the NZP-CSI-RS-Resource 8120 configuration. Specifically, freqBand 8122-6 can correspond to the corresponding parameter, and 'nrofRBs' and 'startingRB' can be configured in RRC as parameters that determine the frequency domain in which the CSI-RS is transmitted. In a case where $N_{BW}^{size}$ and $N_{BW}^{start}$, which represent the domain in which the system BW is transmitted, are indicated to the UE, the frequency domain in which the CSI-RS is transmitted can be determined as shown in Table 9 below.

[Table 9]

Both *nrofRBs* and *startingRB* are configured as integer multiples of 4 RBs, and the reference point for *startingRB* is CRB 0 on the common resource block grid.

If $startingRB < N_{BW}^{start}$, the UE shall assume that the initial CRB index of the CSI-RS resource is $N_{initial\ RB} = N_{BW}^{start}$, otherwise $N_{initial\ RB}$ = *startingRB*.

If $nrofRBs > N_{BW}^{size} + N_{BW}^{start} - N_{initial\ RB}$, the UE shall assume that the bandwidth of the CSI-RS resource is $N_{CSI-RS}^{BW} = N_{BW}^{size} + N_{BW}^{start} - N_{initial\ RB}$, otherwise $N_{CSI-RS}^{BW} = nrofRBs$.

In all cases, the UE shall expect that $N_{CSI-RS}^{BW} \geq \min(24,\ N_{BW}^{size})$.

< Method 8 >

The base station can indicate to the UE the periodicity and offset value where CSI-RS is transmitted to reduce energy consumption. The more frequently periodic CSI-RS transmission occurs, the more energy consumption of the base station will be induced. Therefore, in a mode where the base station reduces energy consumption, in a case where the CSI-RS transmission periodicity configured through RRC is short, it is necessary to change the periodicity to a large value. In addition, an operation to adjust the periodicity to a short interval in time may be necessary.

With reference to FIG. 9, the configuration of the parameter related to the CSI-RS transmission periodicity can be referred to periodicityAndOffset(CSI-ResourcePeriodicityAndOffset) 8127 in the NZP-CSI-RS-Resource 8120 configuration. Therefore, in order to adjust the corresponding configuration parameter, it is necessary to indicate the configurations of the CSI-RS transmission periodicity and offset value for each resource configuration included in the resource set in the resource set configurations in all CSI resource configurations. In this case, not only must nzp-CSI-RS-ResourceId 8121 be indicated, but in a case where the indication of the corresponding CSI-RS transmission periodicity and offset value is considered through MAC-CE and/or DCI, a lot of signaling overhead may occur.

As a method for reducing this signaling overhead, the differential values of the CSI-RS transmission periodicity can be indicated for each CSI resource configuration, each resource set configuration, or each resource configuration. For example, $\lceil \log_2 X \rceil$ bits can be used to indicate X differential values. For example, in the case of X=4, 2 bits are used, and with the information {-4, -2, 0, +2}, '-4' can indicate that the CSI-RS transmission periodicity is reduced by 4 times, '-2' can indicate that the CSI-RS transmission periodicity is reduced by 2 times, '0' can indicate that the CSI-RS transmission periodicity has no change, and '2' can indicate that the CSI-RS transmission periodicity is increased by 2 times. In the disclosure, the interpretation method of the number of bits used to indicate the differential value and the indicated bits are not limited thereto.

Table 10 shows examples of periodicity and corresponding offsets configured through periodicityAndOffset(CSI-ResourcePeriodicityAndOffset) 8127 parameter.

However, with reference to Table 10 below, a problem may occur in indicating the differential values of the CSI-RS transmission periodicity. This is because the CSI-RS transmission periodicity is 40 slots in the case of being reduced by 2 times from 80 slots, but there are also 64 slots in the middle in Table 10. Therefore, only specific periodicity in Table 10 below can be selected separately. For example, {slots 20, slots 40, slots 80, slots 160, slots 320, slots 640} can be assumed as the CSI-RS transmission periodicity used when the base station performs an energy consumption reduction operation. In this case, in the case of indicating the differential value of the CSI-RS transmission periodicity, the corresponding offset value can also be applied by changing it by differential value from the value configured in RRC. For example, in a case where the CSI-RS transmission periodicity configured in RRC is 80 slots and the offset is 4, in a case where the CSI-RS transmission periodicity is changed to 40 slots according to a differential value, the offset can be changed to 2.

[Table 10]

| CSI-ResourcePeriodicityAndOffset ::= | CHOICE { |
|---|---|
| slots4 | INTEGER (0..3), |
| slots5 | INTEGER (0..4), |
| slots8 | INTEGER (0..7), |

| | |
|---|---|
| slots10 | INTEGER (0..9), |
| slots16 | INTEGER (0..15), |
| slots20 | INTEGER (0..19), |
| slots32 | INTEGER (0..31), |
| slots40 | INTEGER (0..39), |
| slots64 | INTEGER (0..63), |
| slots80 | INTEGER (0..79), |
| slots160 | INTEGER (0..159), |
| slots320 | INTEGER (0..319), |
| slots640 | INTEGER (0..639) |
| } | |

< Method 9 >

Method 9 proposes a method for CSI measurement and reporting of the UE in a case where CSI resource configuration and CSI report configuration are adjusted at shorter time intervals during an operation process in which the base station reduces energy consumption. This may correspond to a case where the base station indicates CSI measurement restriction (hereinafter referred to as MR). In other words, MR can be interpreted as an operation in which the base station restricts the UE to use specific CSI-RS resources for CSI measurements for a changed transmission method, thereby enabling more accurate CSI reporting to the base station.

In a case where the base station does not indicate MR activation, the UE can generally perform channel measurement using CSI-RS received before a CSI reference resource. How much CSI-RS the UE will use before based on a CSI reference resource can be determined by a UE implementation. For example, a measurement window may be used for this. This method can also be applied to measuring interference using CSI-RS.

In contrast, in a case where the base station adjusts the MR at short time intervals through MAC-CE or DCI, the UE should measure CSI based on the corresponding indication and report it to the base station. Therefore, in this case, a CSI measurement method needs to be defined. Specifically, the following alternatives can be considered. The disclosure is not limited to the following alternatives.

- Alternative 1: When the base station indicates MR through MAC-CE or DCI, the UE can perform channel measurement using only one of the latest CSI-RS resources received from the base station before the CSI reference resource. Further, the UE can perform interference measurement using only one of the latest CSI-RS or CSI-IM resources received before the CSI reference resource. Further, the UE can generate and report CSI based on this. According to Alternative 1, the UE can expect that at least one CSI-RS for channel measurement and interference measurement for CSI reporting is provided in a case where the MR is indicated through MAC-CE or DCI. This may mean that the base station may indicate MR through MAC-CE or DCI so that at least one CSI-RS for channel and interference measurement can be transmitted to the UE after the MR indication is activated and before the CSI reference resource. This may mean that the base station may adjust the timing of the MR indication so that at least one CSI-RS exists after the MR indication is activated and before the CSI reference resource. The UE may not expect the MR indication to be received after the timing at which the most recent/latest CSI-RS received before the CSI reference resource has been transmitted. This may be achieved through the appropriate CSI-RS resource setting and CSI reporting setting configuration of the base station.

- Alternative 2: When the base station indicates MR through MAC-CE or DCI, the base station may provide at least one CSI-RS for channel and interference measurement to the UE after the indication is activated and before the CSI reference resource.

The above alternatives may be used in combination. In addition, in a case where one or more of the alternatives is supported, a method in which alternative is used is configured by higher layer signaling may be considered. Here, the configuration through higher layer signaling may be RRC configuration. In addition, although the case in which MAC-CE or DCI is used as the MR indication method is mentioned above, a method in which the MR indication is implicitly indicated may also be considered. For example, it may be determined that the MR is indicated in a case where the base station is in the energy saving mode. In other words, the MR indication may be determined depending on whether the base station is configured to the energy saving mode. Whether the base station is in the energy saving mode may be explicitly indicated to the UE through configurations, or may be indicated in an implicit manner. The method in which the base station indicates to the UE whether the base station is in the energy saving mode is not limited to a specific method in the disclosure.

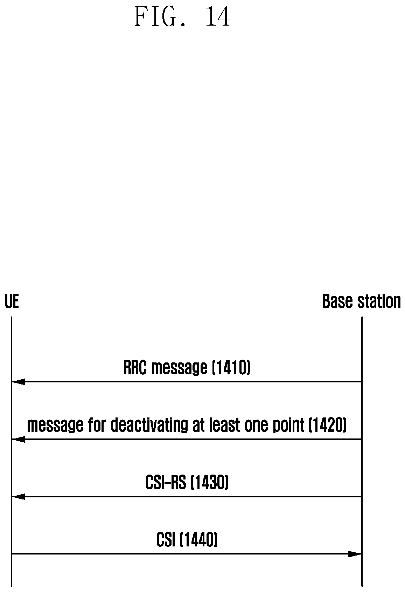

FIG. 14 illustrates a signaling procedure of a UE and base station according to an embodiment of the disclosure.

The operations in FIG. 14 may be based on at least one of the above-described methods 1 to 9.

In operation 1410, the UE may receive an RRC message from the base station. That is, the base station may transmit an RRC message to the UE. The RRC message may include CSI-related parameters (e.g., CSI report configuration (CSI-ReportConfig, 8400), CSI measurement configuration (CSI-MeasConfig, 8500), CSI resource configuration (CSI-ResourceConfig, 8000) and sub-parameter(s)). For example, the RRC message may include information indicating the number of ports.

In operation 1420, the UE may receive a message from the base station to deactivate at least one port among the ports corresponding to the number of ports. That is, the base station may transmit a message to the UE to deactivate at least one port. The above message may be transmitted in a case where the base station operates in the energy saving mode. For example, the message may be transmitted through MAC-CE or DCI. The message may include resource allocation information in a frequency domain associated with the at least one port. The message may further include resource allocation information in a time domain associated with the at least one port. For example, the message may be constituted with a bitmap.

In operation 1430, the UE may receive CSI-RS from the base station based on the activated ports. That is, the base station may transmit the CSI-RS to the UE. The activated ports may be ports that are among the ports corresponding in number to the number of ports received through the RRC message but exclude the at least one antenna port deactivated on the basis of the message.

In operation 1440, the UE may report the CSI acquired based on the CSI-RS to the base station. That is, the base station may receive the CSI from the UE.

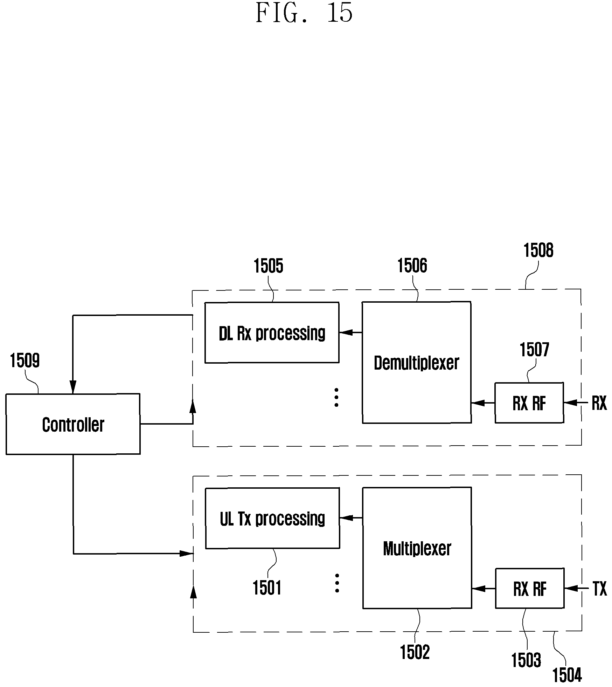

Some of the operations in FIG. 14 described above may be omitted, or two or more operations may be combined and performed in one operation. In addition, the operations in FIG. 14 may be performed by the UE and base station devices in FIGS. 15 to 17.

FIG. 15 is a diagram illustrating a UE transceiver device in a wireless communication system according to an embodiment of the disclosure. For convenience of explanation, devices not directly related to the disclosure may be omitted from the drawing and description.

With reference to FIG. 15, a UE may be constituted with a transmitter 1504 constituted with an UL transmission processing block 1501, a multiplexer 1502, a transmission RF block 1503, a receiver 1508 constituted with a DL reception processing block 1505, demultiplexer 1506, and a reception RF block 1507, and a controller 1509. The controller 1509 may control the respective constituent blocks of the receiver 1508 for receiving a data channel or control channel sent by the base station and the respective constituent blocks of the transmitter 1504 for transmitting UL signals.

The UL transmission processing block 1501 of the transmitter 1504 of the UE may generate a signal for transmission by performing a process, such as channel coding, modulation, etc. The signal generated in the UL transmission processing block 1501 may be multiplexed with another UL signal by the multiplexer 1502, subjected to signal processing in the transmission RF block 1503, and then may be sent to the base station.

The receiver 1508 of the UE may de-multiplex the signal received from the base station and distribute to the respective DL reception processing blocks. The DL reception processing block 1505 may obtain control information or data sent by the base station by performing a process such as demodulation, channel decoding, and/or the like on the DL signal from the base station. The receiver 1508 of the UE may provide the output result of the DL reception processing block to the controller 1509 to support operation of the controller 1509.

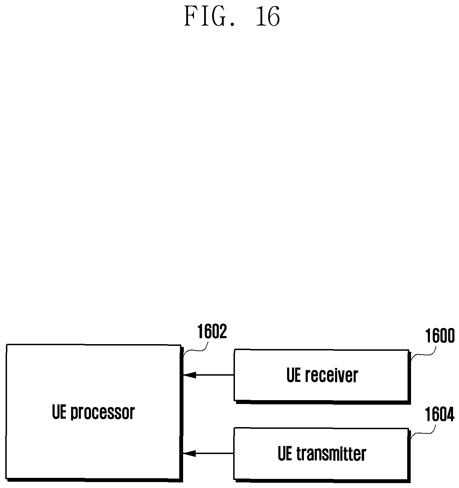

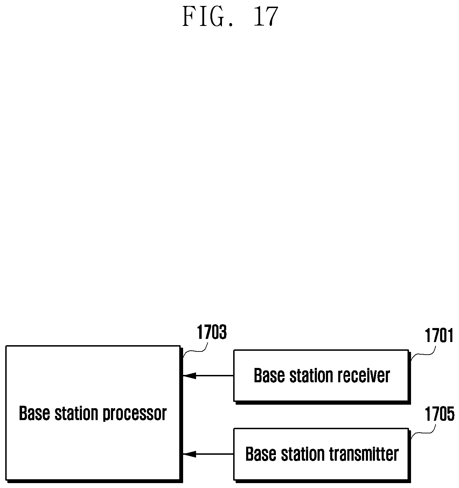

In order to perform the above embodiments of the disclosure, the transmitter, receiver, and processor of the UE and base station are respectively illustrated in FIG. 16 and FIG. 17.

Specifically, FIG. 16 is a block diagram illustrating the internal structure of the UE according to an embodiment of the disclosure.

With reference to FIG. 16, the UE of the disclosure may include a UE receiver 1600, a UE transmitter 1604, and a UE processor 1602. The UE receiver 1600 and UE transmitter 1604 may be collectively referred to as a transceiver in the embodiment of the disclosure. The transceiver may transmit or receive signals to or from the base station. The signals may include control information and data. For this, the transceiver may be constituted with an RF transmitter for up-converting the frequency of a signal to be transmitted and amplifying the signal, an RF receiver for low-noise amplifying a received signal and down-converting the frequency of the received signal, and the like. In addition, the transceiver may receive a signal on a wireless channel and output the signal to the UE processor 1602, and transmit a signal output from the UE processor 1602 on a wireless channel. The UE processor 1602 may control a series of processes for the UE to operate according to the above-described embodiments of the disclosure.

FIG. 17 is a block diagram illustrating the internal structure of the base station according to an embodiment of the disclosure.

With reference to FIG. 17, the base station of the disclosure may include a base station receiver 1701, a base station transmitter 1705, and a base station processor 1703. The base station receiver 1701 and base station transmitter 1705 may be collectively referred to as a transceiver in the embodiment of the disclosure. The transceiver may transmit or receive signals to or from the UE. The signals may include control information and data. For this, the transceiver may be constituted with an RF transmitter for up-converting the frequency of a signal to be transmitted and amplifying the signal, an RF receiver for low-noise amplifying a received signal and down-converting the frequency of the received signal, and the like. In addition, the transceiver may receive a signal on a wireless channel and output the signal to the base station processor 1703, and transmit a signal output from the base station processor 1703 on a wireless channel. The base station processor 1703 may control a series of processes for the base station to operate according to the above-described embodiments of the disclosure.

Meanwhile, the embodiments of the disclosure disclosed in this specification and drawings are only specific examples presented to easily explain the technical content of the disclosure and help understand the disclosure, and are not intended to limit the scope of the disclosure. That is, it is obvious to those skilled in the art that other modified examples based on the technical idea of the disclosure are possible. In addition, each of the above embodiments can be combined and operated as needed. For example, parts of all embodiments of the disclosure can be combined and operated as a base station and a UE.

**Claims**

1. A method performed by a terminal in a wireless communication system, comprising:

   receiving, from a base station, a radio resource control (RRC) message including information indicating a number of ports;
   receiving, from the base station, a message for deactivating at least one port among ports corresponding to the number of ports, wherein the message includes resource allocation information in a frequency domain associated with the at least one port;
   receiving a channel state information reference signal (CSI-RS) from the base station via ports that are among the ports corresponding to the number of ports but exclude the at least one antenna port deactivated on the basis of the message; and
   reporting, to the base station, channel state information (CSI) acquired on the basis of the CSI-RS.

2. The method of claim 1, wherein the message further includes resource allocation information in a time domain associated with the at least one port.

3. The method of claim 1, wherein the message is received via a medium access control-control element (MAC-CE) or downlink control channel (DCI).

4. The method of claim 1, wherein the message is constituted with a bitmap.

5. A method performed by a base station in a wireless communication system, comprising:

transmitting, to a terminal, a radio resource control (RRC) message including information indicating a number of ports;
determining to deactivate at least one port among ports corresponding to the number of ports;
transmitting, to the terminal, a message for deactivating the at least one port, wherein the message includes resource allocation information in a frequency domain associated with the at least one port;
transmitting, to the terminal, a channel state information reference signal (CSI-RS) via ports that are among the ports corresponding to the number of ports but exclude the at least one antenna port deactivated on the basis of the message; and
receiving, from the terminal, channel state information (CSI) based on the CSI-RS.

6. The method of claim 5, wherein the message further includes resource allocation information in a time domain associated with the at least one port.

7. The method of claim 5, wherein the message is transmitted via a medium access control-control element (MAC-CE) or downlink control channel (DCI).

8. The method of claim 5, wherein the message is constituted with a bitmap.

9. A terminal in a wireless communication system, comprising:

a transceiver; and
a controller functionally connected to the transceiver,
wherein the controller is configured to:

receive, from a base station, a radio resource control (RRC) message including information indicating a number of ports;
receive, from the base station, a message for deactivating at least one port among ports corresponding to the number of ports, wherein the message includes resource allocation information in a frequency domain associated with the at least one port;
receive a channel state information reference signal (CSI-RS) from the base station via ports that are among the ports corresponding to the number of ports but exclude the at least one antenna port deactivated on the basis of the message; and
report, to the base station, channel state information (CSI) acquired on the basis of the CSI-RS.

10. The terminal of claim 9, wherein the message further includes resource allocation information in a time domain associated with the at least one port.

11. The terminal of claim 9, wherein the message is received via a medium access control-control element (MAC-CE) or downlink control channel (DCI).

12. The terminal of claim 9, wherein the message is constituted with a bitmap.

13. A base station in a wireless communication system, comprising:

a transceiver; and
a controller functionally connected to the transceiver,
wherein the controller is configured to:

transmit, to a terminal, a radio resource control (RRC) message including information indicating a number of ports;
determine to deactivate at least one port among ports corresponding to the number of ports;
transmit, to the terminal, a message for deactivating the at least one port, wherein the message includes resource allocation information in a frequency domain associated with the at least one port;
transmit, to the terminal, a channel state information reference signal (CSI-RS) via ports that are among the ports corresponding to the number of ports but exclude the at least one antenna port deactivated on the basis of the message; and

receive, from the terminal, channel state information (CSI) based on the CSI-RS.

14. The base station of claim 13, wherein the message further includes resource allocation information in a time domain associated with the at least one port.

15. The base station of claim 13, wherein the message is transmitted via a medium access control-control element (MAC-CE) or downlink control channel (DCI), and

the message is constituted with a bitmap.

# FIG. 1

Frame (114)

Subframe (105)

Slot (106)

Transmission Bandwidth $N_{BW}$ Subcarriers (104)

$N^{RB}_{SC}$ Subcarriers (110)

Resource Element (112)

$N^{slot}_{symb}$ Symbols (102)

Frequency

Time

# FIG. 2

SS/PBCH periodicity = P

Half frame = 0.5 ms

SS/PBCH block

| #0 | #1 | #2 | #3 | #4 | ..... | #L-1 |

Time

t1
(201)

t2
(202)

UE1
(205)

(203)

#d0

#d1

#d2   Beam sweeping

#d3

gNB

#d4

UE2
(206)

(204)

# FIG. 3

UE                                                                    gNB

① Random Access Preamble Message 1 (310) →

← Random Access Response Message 2 (320) ②

③ Random Access Transmission Message 3 (330) →

← random access contention resolution message 4 (340) ④

FIG. 4

UE
(401)

gNB
(402)

UE capability information request (410)

UE capability information (420)

FIG. 5

# FIG. 6

FIG. 7

FIG. 8A

CSI resource configuration

Resource set configuration

Resource configuration

FIG. 8B

FIG. 9

8100 NZP-CSI-RS-ResourceSet
8110 nzp-CSI-ResourceSetId
8120 nzp-CSI-RS-Resources
8130 Repetition {on, off}
8140 aperiodicTriggeringOffset
8150 trs-Info {true}

8120 NZP-CSI-RS-Resource
8121 nzp-CSI-RS-ResourceId
8122 resourceMapping
8123 powerControlOffset {-8..15}
8124 powerControlOffsetSS {db-3, db0, db3, db6}
8125 scramblingID
8126 qcl-InfoPeriodicCSI-RS
8127 periodicityAndOffset {CSI-ResourcePeriodicityAndOffset}

8122 CSI-RS-ResourceMapping
8122-1 frequencyDomainAllocation
8122-2 nrofPorts
8122-3 firstOFDMSymbolInTimeDoman
8122-4 cdm-Type
8122-5 Density
8122-6 freqBand

8400 CSI-ReportConfig
8500 CSI-MeasConfig
8000 CSI-ResourceConfig
8001 csi-ResourceConfigId
8002 csi-RS-ResourceSetList
8003 bwp-Id
8004 resourceType {AP, SP, P}

8200 CSI-SSB-ResourceSet
8210 csi-SSB-ResourceSetId
8220 csi-SSB-ResourceList {SSB-Index}

8300 CSI-IM-ResourceSet
8310 csi-IM-ResourceSetId
8320 csi-IM-Resources

8320 CSI-IM-Resource
8321 csi-IM-ResourceId
8322 csi-IM-ResourceElementPattern
8323 freqBand
8324 periodicityAndOffset {CSI-ResourcePeriodicityAndOffset}

FIG. 10

RRC configured CSI resource

| Resource #0 | Resource #1 | Resource #2 | Resource #3 | ... | Resource #X-1 |

MAC CE based resource activation    DCI based resource activation

# FIG. 11A

RRC configured CSI resource

| Resource #0 | Resource #1 | Resource #2 | Resource #3 | ... | Resource #X-1 |

FIG. 11B

RRC configured CSI resource for network energy saving mode

| Resource #0 | Resource #1 | ... | Resource #Y-1 |

FIG. 12

RRC configured CSI resource

| Resource #0 | Resource #1 | Resource #2 | Resource #3 | ... | Resource #X-1 |

CSI-RS periodicity A

\# of CSI-RS port B

CSI-RS periodicity A'

\# of CSI-RS port B'

Network energy saving mode

FIG. 13

RRC configured CSI resource

| Resource #0 | Resource #1 | Resource #2 | Resource #3 | ... | Resource #N-1 |

Resource deactivation for periodic resource(s)

# FIG. 14

UE            Base station

RRC message (1410)

message for deactivating at least one point (1420)

CSI-RS (1430)

CSI (1440)

# FIG. 15

FIG. 16

1602

1600

1604

UE processor

UE receiver

UE transmitter

FIG. 17

1703

1701

Base station receiver

Base station processor

1705

Base station transmitter

<table>
<tr><td colspan="2">INTERNATIONAL SEARCH REPORT</td><td>International application No.<br>**PCT/KR2023/010726**</td></tr>
</table>

**A.    CLASSIFICATION OF SUBJECT MATTER**

**H04W 52/02**(2009.01)i; **H04B 7/06**(2006.01)i; **H04W 72/23**(2023.01)i; **H04L 5/00**(2006.01)i

According to International Patent Classification (IPC) or to both national classification and IPC

**B.    FIELDS SEARCHED**

Minimum documentation searched (classification system followed by classification symbols)

H04W 52/02(2009.01); H04B 7/04(2006.01); H04B 7/06(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포트의 수(number of ports), RRC 메시지(radio resource control message), 비활성화(deactivation), 주파수 도메인(frequency domain), 안테나 포트(antenna port), CSI-RS(channel state information reference signal), CSI(channel state information) 보고(report)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2264065 B1 (LG ELECTRONICS INC.) 11 June 2021 (2021-06-11)<br>See paragraphs [0103], [0134] and [0292]-[0297]; claims 1-4; and figure 8. | 1-15 |
| A | KR 10-1810962 B1 (PANTECH INC.) 25 January 2018 (2018-01-25)<br>See paragraphs [0104]-[0107]; and figure 15. | 1-15 |
| A | ERICSSON. On CSI-RS Pooling and Resource Allocation. R1-1700762, 3GPP TSG-RAN WG1 #87ah-NR. Spokane, WA, USA. 10 January 2017.<br>See section 2. | 1-15 |
| A | KR 10-2016-0110271 A (SAMSUNG ELECTRONICS CO., LTD.) 21 September 2016 (2016-09-21)<br>See paragraphs [0217]-[0220]; and figure 12. | 1-15 |
| A | HUAWEI et al. Summary of Further Email discussion for Rel-17 CSI enhancements. R1-2009530, 3GPP TSG RAN WG1 Meeting #103-e, E-meeting. 11 November 2020.<br>See pages 1-2. | 1-15 |

☐ Further documents are listed in the continuation of Box C.    ☑ See patent family annex.

| | | |
|---|---|---|
| *    Special categories of cited documents: | "T" | later document published after the international filing date or priority date and not in conflict with the application but cited to understand the principle or theory underlying the invention |
| "A"    document defining the general state of the art which is not considered to be of particular relevance | | |
| "D"    document cited by the applicant in the international application | "X" | document of particular relevance; the claimed invention cannot be considered novel or cannot be considered to involve an inventive step when the document is taken alone |
| "E"    earlier application or patent but published on or after the international filing date | | |
| "L"    document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&" | document member of the same patent family |
| "P"    document published prior to the international filing date but later than the priority date claimed | | |

| Date of the actual completion of the international search | Date of mailing of the international search report |
|---|---|
| **20 October 2023** | **20 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/010726**

| Patent document cited in search report | | | Publication date (day/month/year) | Patent family member(s) | | | Publication date (day/month/year) |
|---|---|---|---|---|---|---|---|
| KR | 10-2264065 | B1 | 11 June 2021 | CN | 110476391 | A | 19 November 2019 |
| | | | | CN | 110476391 | B | 28 December 2021 |
| | | | | EP | 3605926 | A1 | 05 February 2020 |
| | | | | EP | 3605926 | A4 | 30 December 2020 |
| | | | | EP | 3605926 | B1 | 09 March 2022 |
| | | | | KR | 10-2019-0117726 | A | 16 October 2019 |
| | | | | US | 11146369 | B2 | 12 October 2021 |
| | | | | US | 2020-0044802 | A1 | 06 February 2020 |
| | | | | WO | 2018-182256 | A1 | 04 October 2018 |
| KR | 10-1810962 | B1 | 25 January 2018 | CN | 103155456 | A | 12 June 2013 |
| | | | | CN | 103155456 | B | 29 June 2016 |
| | | | | CN | 106102174 | A | 09 November 2016 |
| | | | | CN | 106102174 | B | 24 September 2019 |
| | | | | EP | 2605433 | A2 | 19 June 2013 |
| | | | | EP | 2605433 | A4 | 26 April 2017 |
| | | | | EP | 2605433 | B1 | 27 February 2019 |
| | | | | JP | 2013-533715 | A | 22 August 2013 |
| | | | | JP | 2015-146610 | A | 13 August 2015 |
| | | | | JP | 2016-178697 | A | 06 October 2016 |
| | | | | JP | 5718464 | B2 | 13 May 2015 |
| | | | | JP | 5952449 | B2 | 13 July 2016 |
| | | | | JP | 6185116 | B2 | 23 August 2017 |
| | | | | KR | 10-1719542 | B1 | 27 March 2017 |
| | | | | KR | 10-1790502 | B1 | 30 October 2017 |
| | | | | KR | 10-2012-0015255 | A | 21 February 2012 |
| | | | | KR | 10-2012-0015977 | A | 22 February 2012 |
| | | | | US | 11012214 | B2 | 18 May 2021 |
| | | | | US | 2013-0136100 | A1 | 30 May 2013 |
| | | | | US | 2015-0071241 | A1 | 12 March 2015 |
| | | | | US | 2015-0326363 | A1 | 12 November 2015 |
| | | | | US | 2016-0294527 | A1 | 06 October 2016 |
| | | | | US | 2017-0353280 | A1 | 07 December 2017 |
| | | | | US | 2019-0245668 | A1 | 08 August 2019 |
| | | | | US | 2021-0273766 | A1 | 02 September 2021 |
| | | | | US | 8897182 | B2 | 25 November 2014 |
| | | | | US | 9088396 | B2 | 21 July 2015 |
| | | | | US | 9369251 | B2 | 14 June 2016 |
| | | | | US | 9742542 | B2 | 22 August 2017 |
| | | | | WO | 2012-021018 | A2 | 16 February 2012 |
| | | | | WO | 2012-021018 | A3 | 18 May 2012 |
| | | | | WO | 2012-021047 | A2 | 16 February 2012 |
| | | | | WO | 2012-021047 | A3 | 18 May 2012 |
| KR | 10-2016-0110271 | A | 21 September 2016 | EP | 3269046 | A1 | 17 January 2018 |
| | | | | EP | 3269046 | A4 | 25 April 2018 |
| | | | | KR | 10-2483881 | B1 | 02 January 2023 |
| | | | | US | 2016-0269084 | A1 | 15 September 2016 |
| | | | | US | 9705575 | B2 | 11 July 2017 |
| | | | | WO | 2016-148464 | A1 | 22 September 2016 |

Form PCT/ISA/210 (patent family annex) (July 2022)